# EUROPEAN PATENT APPLICATION

(11) **EP 4 361 962 A1**
(43) Date of publication of application: **01.05.2024**
(21) Application number: 23185814.3
(22) Date of filing: 17.07.2023
(51) Int. Cl.: G06V 10/82, G06V 40/10, G06V 40/20

(54) **COMPARISON SUPPORT PROGRAM, COMPARISON SUPPORT METHOD, AND INFORMATION PROCESSING APPARATUS**

(30) Priority: 31.10.2022 JP 2022175148
(71) Applicant: FUJITSU LIMITED, Kawasaki-shi, Kanagawa 211-8588 (JP)
(72) Inventor: Yoshioka, Takahiro, Kawasaki-shi, Kanagawa, 211-8588 (JP); Konno, Takeshi, Kawasaki-shi, Kanagawa, 211-8588 (JP)
(74) Representative: Hoffmann Eitle

(57) **Abstract**

A comparison support program for causing a computer to execute a process, the process includes: obtaining a video that includes a person; detecting an object included in the video by analyzing the obtained video; determining, on a basis of a positional relation between the detected object and any one of a plurality of parts of the person, whether movement of the object and movement of the any one of the plurality of parts have a correlation; when determining that the movement of the object and the movement of the any one of the plurality of parts have the correlation, specifying, among a plurality of frames constituting the video, a first frame which has the correlation; and performing authentication processing of the person by using a second frame that is among the plurality of frames and excludes the first frame.

## Description

### FIELD OF THE INVENTION

Embodiments discussed herein related to a recording medium, a comparison support method, and an information processing device.

### BACKGROUND OF THE INVENTION

Conventionally, there is a case where comparison processing of comparing characteristics related to a first person with characteristics related to a second person in order to determine whether the first person matches the second person is performed. For example, a technology of comparing characteristics such as fingerprints, veins, irises, or voiceprints between persons is conceivable. For example, a technology of comparing characteristics of gait between persons is also conceivable.

For example, as a conventional technology, analysis data indicating walking characteristics of a pedestrian captured in an image in a real space is compared with personal identification data to identify the pedestrian captured in the image. For example, there is a technology of applying a shape model to an image of a subject and extracting time-series image data of representative point positions in units of parts. For example, there is also a technology of recognizing the identity of a person in a video according to walking characteristics of the person. Furthermore, for example, there is a technology of detecting a partially periodic movement of an electronic device. For example, refer to Japanese Laid-Open Patent Publication No. 2017-205135, Japanese Laid-Open Patent Publication No. 2005-202653, U.S. Patent Application Publication No. 2017/0243058, and U.S. Patent Application Publication No. 2020/0026831.

### SUMMARY OF THE INVENTION

It is an object in one aspect of the embodiments to at least solve the above problems in the conventional technologies.

According to an aspect of an embodiment, a comparison support program for causing a computer to execute a process, the process includes: obtaining a video that includes a person; detecting an object included in the video by analyzing the obtained video; determining, on a basis of a positional relation between the detected object and any one of a plurality of parts of the person, whether movement of the object and movement of the any one of the plurality of parts have a correlation; when determining that the movement of the object and the movement of the any one of the plurality of parts have the correlation, specifying, among a plurality of frames constituting the video, a first frame which has the correlation; and performing authentication processing of the person by using a second frame that is among the plurality of frames and excludes the first frame.

### BRIEF DESCRIPTION OF DRAWINGS

FIG. 1 is an explanatory diagram depicting one example of a comparison support method according to an embodiment.
FIG. 2 is an explanatory diagram depicting an example of a comparison processing system 200.
FIG. 3 is a block diagram depicting a hardware configuration example of an information processing device 100.
FIG. 4 is an explanatory diagram depicting an example of stored contents in a characteristics information management table 400.
FIG. 5 is a block diagram depicting a hardware configuration example of a video shooting device 201.
FIG. 6 is a block diagram depicting a functional configuration example of the information processing device 100.
FIG. 7 is an explanatory diagram depicting a flow of operations of the information processing device 100.
FIG. 8 is an explanatory diagram depicting an example of obtaining skeletal frame information.
FIG. 9 is an explanatory diagram depicting an example of obtaining the skeletal frame information.
FIG. 10 is an explanatory diagram depicting an example of learning a machine learning model.
FIG. 11 is an explanatory diagram depicting an example of detecting a person.
FIG. 12 is an explanatory diagram depicting an example of detecting belongings.
FIG. 13 is an explanatory diagram depicting an example of specifying frames as excluded frames.
FIG. 14 is an explanatory diagram depicting an example of specifying one or more frames as processing subjects.
FIG. 15 is an explanatory diagram depicting an example of performing comparison processing.
FIG. 16 is a flowchart depicting an example of an overall processing procedure.

### DESCRIPTION OF THE INVENTION

First, problems associated with the conventional techniques are discussed. In the conventional technology, comparison processing of persons is sometimes difficult to perform accurately. For example, there is a case where characteristics of the gait of a person carrying baggage do not match characteristics of the gait of the same person carrying no baggage and thus, the comparison processing of the person sometimes cannot be performed accurately.

Embodiments of a recording medium, a comparison support method, and an information processing device according to the disclosure are described in detail with reference to the accompanying drawings.

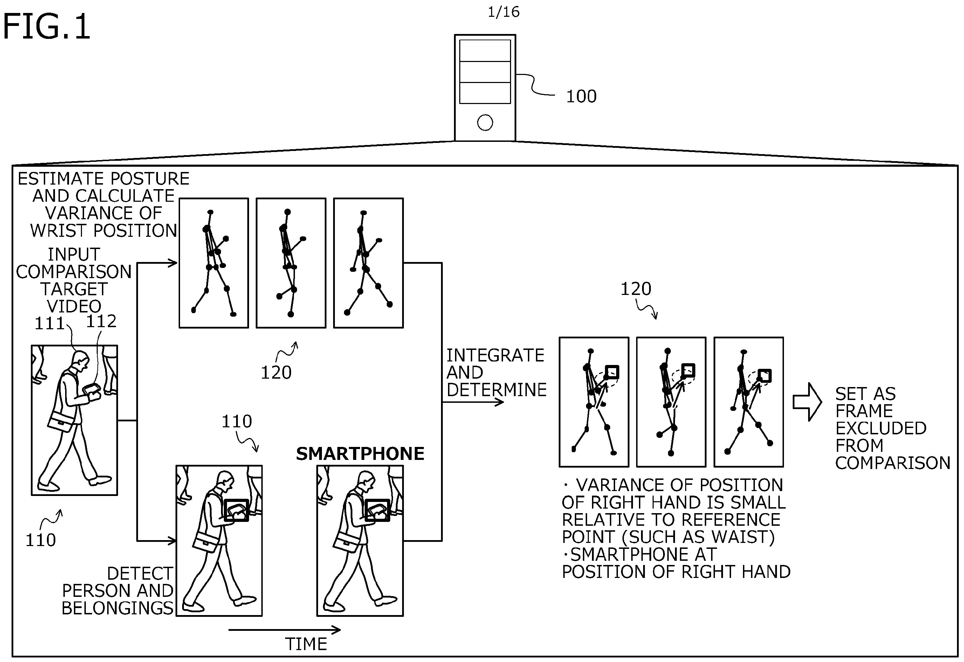

FIG. 1 is an explanatory diagram depicting one example of a comparison support method according to an embodiment. An information processing device 100 is a computer for improving the accuracy of comparison processing of persons. The information processing device 100 is, for example, a server or a personal computer (PC).

The comparison processing involves comparing persons to determine whether these persons are the same person. For example, the comparison processing compares characteristics of persons to determine whether the persons are the same person. Specifically, the comparison processing compares persons captured on videos at different timings and determines whether the persons are the same person.

For example, a method of realizing comparison processing of persons by comparing characteristics such as fingerprints, veins, or irises of persons is conceivable. In this method, in some cases, it is difficult to accurately perform the comparison processing of persons. For example, when it is difficult to take fine close-up images of fingers, blood vessels, or eyes of persons, the comparison processing of persons cannot be performed accurately.

For example, a method of realizing comparison processing of persons by comparing characteristics such as voiceprints of the persons is also conceivable. Also in this method, in some cases, it is difficult to accurately perform the comparison processing of persons. For example, when voice data of persons is difficult to measure, the comparison processing of persons cannot be performed accurately. For example, when voice data of persons includes noise, the comparison processing of persons sometimes cannot be performed accurately.

For example, a method of realizing comparison processing of persons by comparing physical appearance characteristics such as the body shape and clothes between the persons is also conceivable. Also in this method, in some cases, it is difficult to accurately perform the comparison processing of persons. For example, the physical appearance characteristics of a person are likely to change with a change in the clothes of the person. For example, the physical appearance characteristics of a person in specific clothes sometimes do not match the physical appearance characteristics of the same person in different clothes, which may prevent the comparison processing of persons from being performed accurately.

For example, a method of realizing comparison processing of persons by comparing characteristics of the gait of the persons is conceivable. Also in this method, in some cases, it is difficult to accurately perform the comparison processing of the persons. For example, characteristics of the gait of a person carrying baggage sometimes do not match characteristics of the gait of the same person carrying no baggage, and the comparison processing of the person cannot be performed accurately in some cases.

For example, a method of selecting the comparison of physical appearance characteristics of persons or the comparison of gait characteristics of persons depending on how the persons are captured on videos is also conceivable. Also in this method, in some cases, it is difficult to accurately perform the comparison processing of persons. For example, characteristics of the gait of a person carrying baggage sometimes do not match characteristics of the gait of the same person carrying no baggage and the problem that the comparison processing of persons cannot be performed accurately in this case is not solved.

As described above, it is conventionally difficult to accurately perform comparison processing of persons in some cases. Accordingly, in the present embodiment, a comparison support method that may improve the accuracy of comparison processing of persons is explained.

In FIG. 1, the information processing device 100 obtains a target video 110 (video subject to processing) that includes multiple frames in which a target person 111 (person as subject of processing) is captured. The information processing device 100 obtains the target video 110 that includes frames in which the target person 111 is captured, for example, by shooting the target video 110 that includes frames in which the target person 111 is captured using an image sensor. The information processing device 100 may obtain the target video 110 that includes frames in which the target person 111 is captured, for example, by receiving the target video 110 that includes frames in which the target person 111 is captured from another computer.

(1-1) The information processing device 100 detects the position of an object 112 on the obtained target video 110. The object 112 is, for example, an object different from the target person 111. Specifically, the object 112 is an object that may be carried by the target person 111. Specifically, the object 112 is an object that may be held by a hand of the target person 111. More specifically, the object 112 is a bag, a rucksack, an umbrella, a jacket, a magazine, a bundle of documents, a tool, a telephone receiver, a smartphone, or the like. The position is, for example, pixel coordinates. For example, the information processing device 100 detects the position of the object 112 in each frame of the obtained target video 110, by analyzing the obtained target video 110.

(1-2) The information processing device 100 detects the position of at least one of multiple parts of the target person 111 on the obtained target video 110. The parts are, for example, the neck, the head, the right shoulder, the left shoulder, the right elbow, the left elbow, the right hand, the left hand, the right knee, the left knee, the right foot, and the left foot. Specifically, the parts are joints. The position is, for example, pixel coordinates. The information processing device 100 detects the position of at least one of the parts of the target person 111 in each frame of the obtained target video 110, for example, by analyzing the obtained target video 110. Specifically, the information processing device 100 detects the position of the right hand or the left hand of the target person 111 in each frame of the obtained target video 110, by analyzing the obtained target video 110.

(1-3) The information processing device 100 specifies one or more frames among the multiple frames of the target video 110 on the basis of a positional relation between the detected position of the object 112 and the position of at least one of the parts of the target person 111 on the target video 110. For example, on the basis of the positional relation between the position of the object 112 and the position of a part, the information processing device 100 specifies one or more frames among the multiple frames, excluding frames in which a correlation is seen between movement of the object 112 and movement of the part.

The information processing device 100 determines, for example, whether the part is a part having a correlation with the object 112 in the movement in each of the frames of the target video 110. For example, the information processing device 100 specifies one or more frames among the frames, excluding frames in which the part has been determined to be a part having a correlation with the object 112 in the movement.

Specifically, the information processing device 100 determines whether the distance between the detected position of the object 112 and the detected position of a part, which in this case is the right hand, is within a predetermined range in each frame of the target video 110. Specifically, when the distance is within the predetermined range, the information processing device 100 determines that the part, that is, the right hand is holding the object 112 and has a correlation in the movement with the object 112. Specifically, when the distance is not within the predetermined range, the information processing device 100 determines that the part, that is, the right hand is not holding the object 112 and is not a part having a correlation in the movement with the object 112. Specifically, the information processing device 100 sets a frame in which the part, that is, the right hand is determined to be a part having a correlation in the movement with the object 112, among the multiple frames as an excluded frame.

Specifically, the information processing device 100 specifies one or more frames that are among the frames and not included among frames that are set as an excluded frame. More specifically, the information processing device 100 may specify at least a predetermined number of consecutive frames that do not include the frames that are set as an excluded frame among the frames.

Accordingly, the information processing device 100 may specify frames in which the probability of an object restricting the movement of a certain part is relatively high and in which the gait of the target person 111 is caused to be different from that in the normal state, and may specify one or more frames that do not include these frames. The normal state is, for example, a state in which the target person 111 is natural. The normal state is, for example, a state in which the target person 111 is empty-handed. For example, the information processing device 100 may determine that an object restricts the movement of a part and that the part is brought to a state where the part may have an anomalous impact on the gait of the target person 111. For example, the information processing device 100 may specify one or more frames that do not include frames in which a certain part is brought to a state where the part may have an anomalous impact on the gait of the target person 111.

Accordingly, the information processing device 100 may specify frames that are likely to become noise at the time of the comparison processing of the target person 111 among the frames, and may specify one or more frames excluding the frames that are likely to become noise. The comparison processing is, for example, processing to determine whether the target person 111 is a specific person as a candidate of the target person 111. Specifically, the comparison processing is performed on the basis of characteristics of the gait of the target person 111. More specifically, the comparison processing is realized by comparing characteristics of the gait of the target person 111 with characteristics of the gait of a specific person as a candidate of the target person 111.

For example, the information processing device 100 may specify frames that are likely to become noise among the multiple frames when characteristics of the gait of the target person 111 are compared with characteristics of the gait of a specific person that is a candidate of the target person 111 in the comparison processing. The information processing device 100 may specify one or more frames to be preferably used when characteristics of the gait of the target person 111 are compared with characteristics of the gait of the specific person as a candidate of the target person 111, among the multiple frames excluding the frames that are likely to become noise.

(1-4) The information processing device 100 performs the comparison processing of the target person 111 on the basis of the specified one or more frames. For example, the information processing device 100 generates a characteristics vector indicating the characteristics of the gait of the target person 111 on the basis of the positions of the multiple parts of the target person 111 in the specified one or more frames. For example, the information processing device 100 determines whether the target person 111 is a specific person as a candidate of the target person 111 on the basis of whether the generated characteristics vector is similar to a characteristics vector indicating the characteristics of the gait of the specific person.

For example, when the generated characteristics vector is similar to the characteristics vector indicating the characteristics of the gait of a specific person as a candidate of the target person 111, the information processing device 100 determines that the target person 111 is the specific person. For example, when the generated characteristics vector is not similar to the characteristics vector indicating the characteristics of the gait of a specific person as a candidate of the target person 111, the information processing device 100 determines that the target person 111 is not the specific person.

Accordingly, the information processing device 100 may accurately perform the comparison processing of the target person 111. The information processing device 100 may select one or more frames excluding frames that are likely to become noise among the multiple frames and may compare characteristics of the gait of the target person 111 with characteristics of the gait of a specific person. Therefore, the information processing device 100 may accurately perform the comparison processing of the target person 111.

For example, even when it is difficult to take a fine close-up image of a finger, a blood vessel, or an eye of a person, the information processing device 100 may accurately perform the comparison processing of persons. Furthermore, for example, even when it is difficult to measure voice data of a person, the information processing device 100 may accurately perform the comparison processing of persons. For example, even when the clothes of a person change, the information processing device 100 may accurately perform the comparison processing of persons.

While a case where the information processing device 100 solely operates is explained above, the information processing device 100 is not limited thereto. For example, the information processing device 100 may cooperate with another computer. For example, multiple computers may cooperate with each other to realize the functions of the information processing device 100. Specifically, the functions of the information processing device 100 may be realized on a cloud server.

While a case where the information processing device 100 analyzes the target video 110 to detect the position of the object 112 in each frame of the target video 110 is explained above, the information processing device 100 is not limited thereto. For example, the information processing device 100 may detect the position of the object 112 in each frame of the target video 110 by receiving the position of the object 112 in each frame of the target video 110 from another computer that analyzes the target video 110.

While a case where the information processing device 100 analyzes the target video 110 to detect the position of at least one of the multiple parts of the target person 111 in each frame of the target video 110 is explained above, the information processing device 100 is not limited thereto. For example, the information processing device 100 may receive the position of a part of the target person 111 in each frame of the target video 110 from another computer that analyzes the target video 110 to detect the position of this part.

While a case where the information processing device 100 detects the position of the part (the right hand) or the left hand of the target person 111 in each frame of the target video 110 by analyzing the target video 110 is explained above, the information processing device 100 is not limited thereto. For example, the information processing device 100 may detect the position of a part excluding the right hand or the left hand of the target person 111 in each frame of the target video 110 by analyzing the target video 110. Specifically, the information processing device 100 may detect the position of the part as the right foot or the left foot of the target person 111 in each frame of the target video 110.

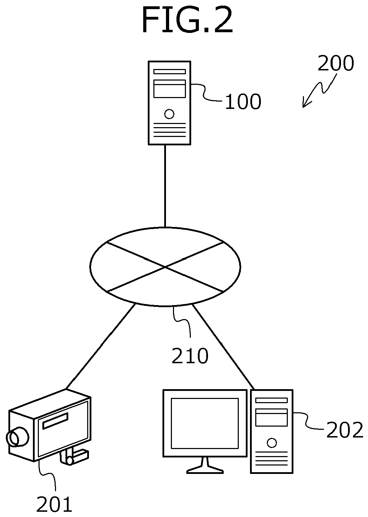

An example of a comparison processing system 200 to which the information processing device 100 depicted in FIG. 1 is applied is explained with reference to FIG. 2.

FIG. 2 is an explanatory diagram depicting an example of the comparison processing system 200. In FIG. 2, the comparison processing system 200 includes the information processing device 100, one or more video shooting devices 201, and one or more client devices 202.

In the comparison processing system 200, the information processing device 100 and each of the video shooting devices 201 are connected via a wired or wireless network 210. The network 210 is, for example, a local area network (LAN), a wide area network (WAN), or the Internet. In the comparison processing system 200, the information processing device 100 and each of the client devices 202 are connected via the wired or wireless network 210.

The information processing device 100 is a computer for performing the comparison processing. The information processing device 100 stores therein, for example, a first machine learning model. The first machine learning model has, for example, a function of outputting the positions of parts of a person captured on a video in response to an input of the video. The parts are, for example, the neck, the head, the right shoulder, the left shoulder, the right elbow, the left elbow, the right hand, the left hand, the right knee, the left knee, the right foot, the left foot, etc. The positions are, for example, the positions of joints of the parts. Each of the positions is, for example, pixel coordinates on the video.

Specifically, the first machine learning model has a function to output the positions of parts of a person in each frame of a video in response to an input of the frame. The first machine learning model is, for example, an artificial intelligence (Al) model. It is conceivable that the first machine learning model is realized, for example, by a neural network, a mathematical expression, or a tree structure.

The information processing device 100 stores therein, for example, a second machine learning model. The second machine learning model has, for example, a function of outputting characteristics information indicating characteristics related the gait of a person on a video in response to an input of the position of a part of the person. The characteristics information is, for example, a characteristics vector. The position is, for example, pixel coordinates on the video.

Specifically, the second machine learning model has a function to output characteristics information indicating characteristics related to the gait of a person in response to an input of the position of a part of the person in two or more consecutive frames. The second machine learning model is, for example, an AI model. It is conceivable that the second machine learning model is realized, for example, by a neural network, a mathematical expression, or a tree structure.

The information processing device 100 stores therein, for example, a third machine learning model. The third machine learning model has, for example, a function to output the position of an object captured on a video in response to an input of the video. The object is, for example, an object different from persons. Specifically, the object is an object that may be carried by a person. Specifically, the object is an object that may be held by a hand of a person. More specifically, the object is a bag, a rucksack, an umbrella, a jacket, a magazine, a batch of documents, a tool, a telephone receiver, a smartphone, or the like. The position is, for example, pixel coordinates.

Specifically, the third machine learning model has a function to output the position of an object in each frame of a video in response to an input of the frame. The third machine learning model is, for example, an AI model. The third machine learning model is assumed to be realized, for example, by pattern matching. It is conceivable that the third machine learning model is realized, for example, by a neural network, a mathematical expression, or a tree structure.

The information processing device 100 stores therein, for example, characteristics information indicating characteristics related to the gait of a specific person to be associated with the specific person. For example, there may be multiple specific persons. The characteristics information is, for example, a characteristics vector. The characteristics information is generated, for example, by the second machine learning model on the basis of a video in which the specific person is captured.

A video in which the specific person is captured is, for example, a sample to be used in comparison processing of the target person. A video in which the specific person is captured is, for example, a video in which the gait of the specific person is captured. Specifically, a video in which the specific person is captured is a video in which the gait of the specific person in the normal state is captured. The normal state is, for example, a state in which the target person is natural. The normal state is, for example, a state in which the target person is empty-handed. A video in which the specific person is captured is generated, for example, by the video shooting device 201.

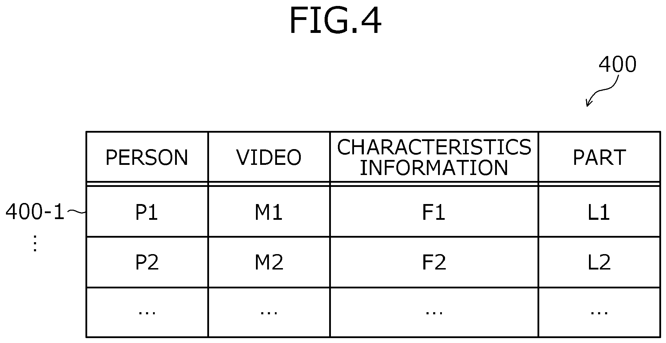

Specifically, the information processing device 100 stores therein a characteristics information management table 400 which will be described later with reference to FIG. 4. The information processing device 100 may have, for example, a video in which the specific person is captured stored therein in association with the specific person. Specifically, the information processing device 100 may receive a video in which the specific person is captured from the video shooting device 201 and store the received video in association with the specific person. The information processing device 100 may generate the characteristics information indicating characteristics related to the gait of the specific person using the second machine learning model on the basis of a video in which the specific person is captured.

The information processing device 100 obtains a target video that includes multiple frames in which the target person is captured. The information processing device 100 obtains the target video, for example, by receiving the video from the video shooting device 201. The information processing device 100 may obtain a video in which multiple persons are captured and accept a designation of the target person among the persons that are captured on the obtained video. For example, the information processing device 100 may accept a designation of the target person by transmitting the obtained video to the client device 202 and receiving information designating the target person among the persons that are captured on the obtained video from the client device 202. The information processing device 100, for example, on the basis of an operation input by a user, may accept a designation of the target person among the persons that are captured on the obtained video.

The information processing device 100 detects the position of an object on the target video. The information processing device 100 detects, for example, the position of an object on each frame of the target video. Specifically, the information processing device 100 detects the position of an object on each frame of the target video on the basis of the target video using the third machine learning model. The type of an object of which the position is to be detected on the target video may be, for example, set in advance. The information processing device 100 may accept a designation of the type of an object of which the position is to be detected on the target video. The information processing device 100 may accept the type of an object of which the position is to be detected on the target video, for example, by receiving information designating the type of the object from the client device 202. The information processing device 100, for example, on the basis of an operation input by a user, may accept a designation of the type of an object whose position is to be detected on the target video. The information processing device 100 detects, for example, the position of the designated object on the target video.

The information processing device 100 detects the position of at least one of multiple parts of the target person on the target video. The information processing device 100 detects, for example, the position of each of the multiple parts of the target person on the target video. Specifically, the information processing device 100 detects the position of each of the multiple parts of the target person in each frame of the target video. Specifically, the information processing device 100 detects the position of each of the multiple parts of the target person in each frame of the target video on the basis of the target video using the first machine learning model.

The information processing device 100 specifies one or more frames among the multiple frames of the target video on the basis of a positional relation between the position of an object of the target video and the position of at least one of the parts of the target person on the target video. For example, the information processing device 100 specifies one or more frames excluding frames in which a correlation is seen between the movement of the object and the movement of at least one of the parts of the target person among the frames of the target video. The information processing device 100, using the second machine learning model, generates characteristics information indicating characteristics related to the gait of the target person, on the basis of the specified one or more frames.

The information processing device 100 performs comparison processing of the target person by comparing the generated characteristics information indicating characteristics related to the gait of the target person with characteristics information indicating characteristics related to the gait of a specific person. For example, the specific person may be set in advance. For example, the information processing device 100 may accept a designation of the specific person. The information processing device 100 may accept a designation of the specific person, for example, by receiving information indicating the specific person from the client device 202. The information processing device 100 may accept a designation of the specific person, for example, on the basis of an operation input by a user.

For example, the information processing device 100 performs the comparison processing to determine whether the target person matches the specific person by comparing the characteristics information indicating characteristics related to the gait of the target person with the characteristics information, which indicates characteristics related to the gait of the specific person. The information processing device 100 outputs a processing result of the comparison processing of the target person. For example, the information processing device 100 outputs a determination result of determination on whether the target person matches the specific person. The form of output is, for example, display on a display, print output by a printer, transmission to other computers, or storage to a storage area.

Specifically, the information processing device 100 transmits the determination result of the determination on whether the target person matches the specific person to the client device 202. The information processing device 100 is managed, for example, by a user that manages the comparison processing system 200. The information processing device 100 is, for example, a server or a personal computer (PC).

The video shooting device 201 is a computer for shooting a certain region and generating a video in which persons are captured. The video shooting device 201 includes a camera that has multiple image sensors and the video shooting device 201, using the camera, shoots a certain region where persons are possibly located. For example, the video shooting device 201 generates a video in which the specific person is captured and transmits the generated video to the information processing device 100. Specifically, the video shooting device 201 may generate a video in which multiple persons that may be the specific person are captured and transmit the generated video to the information processing device 100.

For example, the video shooting device 201 generates a video in which the targe person is captured and transmits the generated video to the information processing device 100. Specifically, the video shooting device 201 may generate a video in which multiple persons that may be the target person are captured and transmit the generated video to the information processing device 100. The video shooting device 201 is, for example, a smartphone. The video shooting device 201 may be, for example, a fixed-point camera. The video shooting device 201 may be, for example, a drone.

The client device 202 is a computer that is used by an operator that intends to use the processing result of the comparison processing of the target person. The client device 202 may receive a video in which a person is captured from the information processing device 100 and output the video to enable the operator to refer to the video. The client device 202 may accept on the basis of an operation input by the operator, a designation of the target person among persons captured on the video and may transmit information designating the target person to the information processing device 100.

The client device 202 may accept on the basis of an operation input by the operator and the client device 202, a designation of the type of an object of which the position is to be detected on the target video and may transmit information designating the type of the object to the information processing device 100. The client device 202 may accept a designation of the specific person on the basis of an operation input by the operator and transmit information designating the specific person to the information processing device 100.

The client device 202 receives a processing result of the comparison processing of the targe person from the information processing device 100. The client device 202 outputs the processing result of the comparison processing of the target person to enable the operator to refer to the result. The form of output is, for example, display on a display, print output by a printer, transmission to other computers, or storage to a storage area. The client device 202 is, for example, a PC, a tablet terminal, or a smartphone.

While a case where the information processing device 100 is a device different from the video shooting device 201 is explained above, the information processing device 100 is not limited thereto. For example, the information processing device 100 may have a function as the video shooting device 201 to operate also as the video shooting device 201. While a case where the information processing device 100 is a device different from the client device 202 is explained above, the information processing device 100 is not limited thereto. For example, the information processing device 100 may have a function as the client device 202 to operate also as the client device 202.

An application example of the comparison processing system 200 is explained next. It is conceivable that the comparison processing system 200 is applied to, for example, a case where comparison processing to determine whether a target person that is captured on a video shot by a security camera matches a specific person such as a missing person or a criminal suspect is to be performed. In this case, the video shooting device 201 is, for example, a security camera. The operator is, for example, a police officer.

It is conceivable that the comparison processing system 200 is applied to, for example, a case where comparison processing to determine whether a target person captured on a video shot by a fixed-point camera that is installed near the entrance of a room matches a specific person that is allowed to enter the room is to be performed. In this case, it is permissible that the comparison processing system 200 does not include the client device 202. The information processing device 100 is assumed to transmit a processing result of the comparison processing to a lock-up management device of the room, or the like, instead of the client device 202 and to execute control to appropriately enable a target person to enter the room.

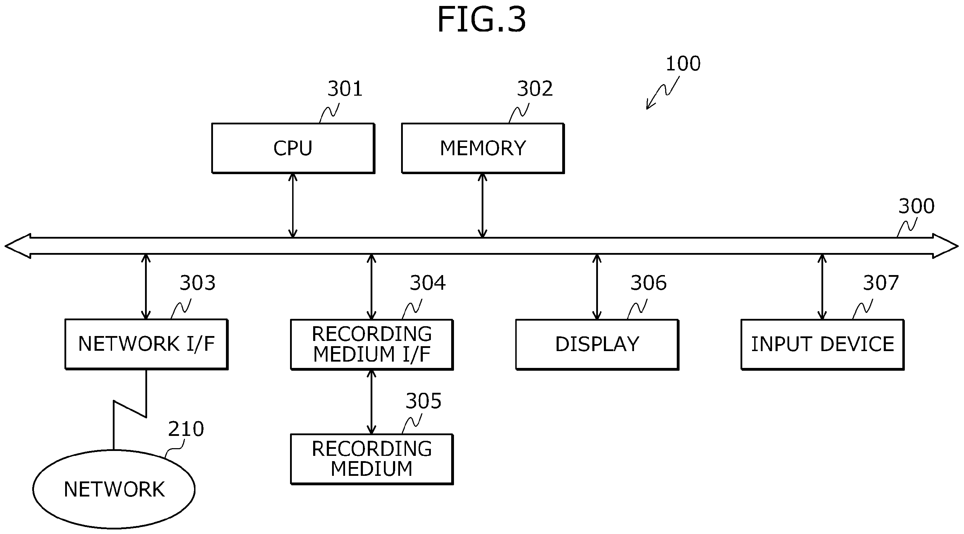

A hardware configuration example of the information processing device 100 is explained next with reference to FIG. 3.

FIG. 3 is a block diagram depicting the hardware configuration example of the information processing device 100. In FIG. 3, the information processing device 100 includes a central processing unit (CPU) 301, a memory 302, and a network interface (I/F) 303. The information processing device 100 also includes a recording medium I/F 304, a recording medium 305, a display 306, and an input device 307. These constituent elements are connected to each other via a bus 300.

The CPU 301 executes the entire control of the information processing device 100. The memory 302 includes, for example, a read only memory (ROM), a random-access memory (RAM), and a flash ROM. Specifically, for example, the flash ROM or the ROM has various programs stored therein, and the RAM is used as the work area of the CPU 301. The programs stored in the memory 302 are loaded onto the CPU 301, whereby the CPU 301 executes encoded processes.

The memory 302 may have stored therein a machine learning model that outputs the position of a part of a person in each frame of a video in response to an input of the frame. The memory 302 may have stored therein a machine learning model that outputs, in response to an input of the position of a part of a person in one or more frames, characteristics information indicating characteristics related to the gait of the person. The memory 302 may have stored therein a machine learning model that outputs the position of an object in each frame of a video in response to an input of the frame. The memory 302 has stored therein, for example, the characteristics information management table 400 described later with reference to FIG. 4.

The network I/F 303 is connected to the network 210 through a communication line and is connected to other computers via the network 210. The network I/F 303 provides an internal interface with the network 210 and controls the input and output of data with respect to other computers. The network I/F 303 is, for example, a modem or an LAN adapter.

The recording medium I/F 304 controls the reading and writing of data with respect to the recording medium 305 under control of the CPU 301. The recording medium I/F 304 is, for example, a disk drive, a solid-state drive (SSD), or a universal serial bus (USB) port. The recording medium 305 is a non-volatile memory that stores therein data written under control of the recording medium I/F 304. The recording medium 305 is, for example, a disk, a semiconductor memory, or a USB memory. The recording medium 305 may be detachable from the information processing device 100.

The display 306 displays data such as a cursor, icons, toolboxes, documents, images, or functional information. The display 306 is, for example, a cathode ray tube (CRT), a liquid crystal display, or an organic electroluminescence (EL) display. The input device 307 has keys for inputting letters, numbers, or various commands and performs input of data. The input device 307 is, for example, a keyboard or a mouse. The input device 307 may be, for example, a touch-screen input pad or a numeric keypad.

The information processing device 100 may have, for example, a camera in addition to the constituent elements described above. The information processing device 100 may have, for example, a printer, a scanner, a microphone, and/or a speaker in addition to the constituent elements described above. The information processing device 100 may have, for example, more than one recording medium I/F 304 and more than one recording medium 305. Configuration may be such that the information processing device 100 omits, for example, the display 306 and/or the input device 307. Further, configuration may be such that the information processing device 100 omits, for example, the recording medium I/F 304 and/or the recording medium 305.

One example of contents stored in the characteristics information management table 400 is explained next with reference to FIG. 4. The characteristics information management table 400 is realized, for example, by a storage area such as the memory 302 or the recording medium 305 of the information processing device 100 depicted in FIG. 3.

FIG. 4 is an explanatory diagram depicting an example of stored contents in the characteristics information management table 400. As depicted in FIG. 4, the characteristics information management table 400 has fields for persons, videos, and characteristics information. In the characteristics information management table 400, characteristics information management information is stored as a record 400-a by setting information in associated fields for each person, where "a" is an arbitrary integer.

Identification information for identifying a person is set in the field for persons. Identification information for identifying a sample of a video in which the person is captured is set in the field for videos. Feature information indicating characteristics of the gait of the person is set in the field for characteristics information. The characteristics information is, for example, a characteristics vector.

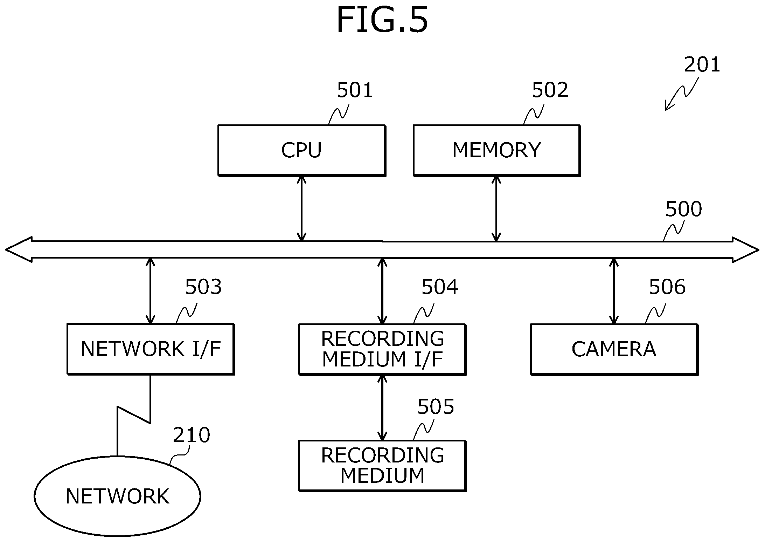

A hardware configuration example of the video shooting device 201 is explained next with reference to FIG. 5.

FIG. 5 is a block diagram depicting the hardware configuration example of the video shooting device 201. In FIG. 5, the video shooting device 201 includes a CPU 501, a memory 502, a network I/F 503, a recording medium I/F 504, a recording medium 505, and a camera 506. These constituent elements are connected to each other via a bus 500.

The CPU 501 executes the entire control of the video shooting device 201. The memory 502 includes, for example, a ROM, a RAM, and a flash ROM. Specifically, for example, the flash ROM or the ROM has various programs stored therein, and the RAM is used as the work area of the CPU 501. The programs stored in the memory 502 are loaded onto the CPU 501, whereby the CPU 501 executes encoded processes.

The network I/F 503 is connected to the network 210 through a communication line and is connected to other computers via the network 210. The network I/F 503 provides an internal interface with the network 210 and controls an input/output of data from/to other computers. The network I/F 503 is, for example, a modem or an LAN adapter.

The recording medium I/F 504 controls the reading and writing of data with respect to the recording medium 505 under control of the CPU 501. The recording medium I/F 504 is, for example, a disk drive, an SSD, or a USB port. The recording medium 505 is a non-volatile memory that stores therein data written under control of the recording medium I/F 504. The recording medium 505 is, for example, a disk, a semiconductor memory, or a USB memory. The recording medium 505 may be detachable from the video shooting device 201.

The camera 506 has multiple image sensors and generates a video by shooting a certain region with the image sensors. For example, when there is a person in a certain region, the camera 506 generates a video in which the person is captured. The camera 506 is, for example, a digital camera. The camera 506 is, for example, a fixed-point camera. The camera 506 may be, for example, movable. The camera 506 is, for example, a security camera.

The video shooting device 201 may have, for example, a keyboard, a mouse, a display, a printer, a scanner, a microphone, and a speaker in addition to the constituent elements described above. The video shooting device 201 may include more than one recording medium I/F 504 and more than one recording medium 505. It is also permissible that the video shooting device 201 does not include the recording medium I/F 504 and the recording medium 505.

A hardware configuration example of the client device 202 is specifically same as that of the information processing device 100 depicted in FIG. 3 and explanations thereof are omitted.

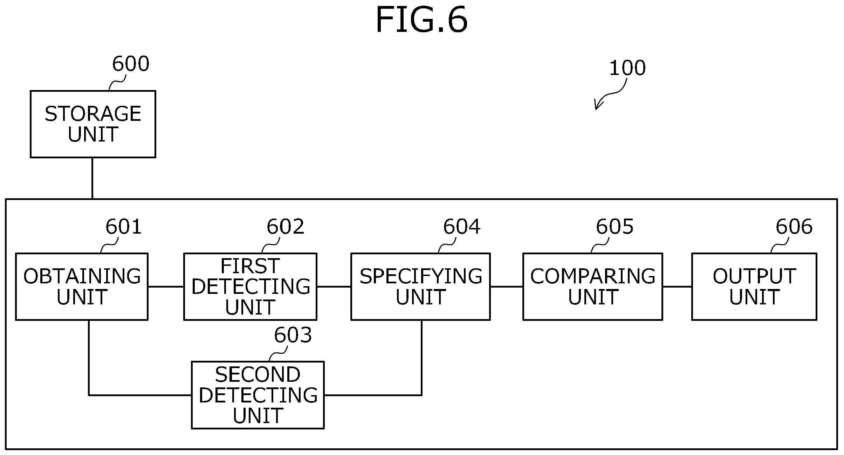

A functional configuration example of the information processing device 100 is explained next with reference to FIG. 6.

FIG. 6 is a block diagram depicting the functional configuration example of the information processing device 100. The information processing device 100 includes a storage unit 600, an obtaining unit 601, a first detecting unit 602, a second detecting unit 603, a specifying unit 604, a comparing unit 605, and an output unit 606.

The storage unit 600 is realized, for example, by the storage area such as the memory 302 and the recording medium 305 depicted in FIG. 3. While a case where the storage unit 600 is included in the information processing device 100 is explained below, the storage unit 600 is not limited thereto. For example, the storage unit 600 may be included in a device different from the information processing device 100 and the stored contents in the storage unit 600 may be referred to by the information processing device 100.

The units from the obtaining unit 601 to the output unit 606 function as an example of a control unit. Specifically, the functions of the units from the obtaining unit 601 to the output unit 606 are realized, for example, by causing the CPU 301 to execute the programs stored in a storage area such as the memory 302 and the recording medium 305 depicted in FIG. 3 or realized by the network I/F 303. Processing results of these functional units are stored, for example, in a storage area such as the memory 302 and the recording medium 305 depicted in FIG. 3.

The storage unit 600 stores therein various types of information to be referred to or updated in processing of the functional units. The storage unit 600 has a machine learning model stored therein. The machine learning model is, for example, an AI model. It is conceivable that the machine learning model is realized, for example, by pattern matching. It is also conceivable that the machine learning model is realized, for example, by a neural network, a mathematical expression, or a tree structure.

The storage unit 600 stores therein, for example, a first machine learning model. The first machine learning model has, for example, a function to output the positions of parts of a person captured on a video in response to an input of the video. The parts are, for example, the neck, the head, the right shoulder, the left shoulder, the right elbow, the left elbow, the right hand, the left hand, the right knee, the left knee, the right foot, or the left foot. The positions are, for example, the positions of bones of the parts. Specifically, the positions are the positions of joints of the bones of the parts. The positions may be, for example, the positions of silhouettes of the parts. The first machine learning model has, for example, a function to output the positions of parts of a person in a frame of the video in response to an input of the frame. Each of the positions is expressed, for example, by pixel coordinates on the frame. The pixel coordinates indicate a position in units of pixels in the vertical direction of the frame and a position in units of pixels in the horizontal direction of the frame. The first machine learning model is, for example, an AI model. It is conceivable that the first machine learning model is realized, for example, by a neural network, a mathematical expression, or a tree structure. Specifically, the storage unit 600 stores therein the first machine learning model by storing parameters that define the first machine learning model therein. The first machine learning model is, for example, set in advance by a user. The first machine learning model may be, for example, obtained by the obtaining unit 601.

The storage unit 600 has, for example, a second machine learning model stored therein. The second machine learning model has a function to output characteristics information related to the gait of a person in response to an input of the position of a part of the person. The characteristics information is, for example, a characteristics vector. The second machine learning model has, for example, a function to output characteristics information related to the gait of a person in response to an input of the position of a part of the person in one or more frames. The second machine learning model is, for example, an AI model. It is conceivable that the second machine learning model is realized, for example, by a neural network, a mathematical expression, or a tree structure. The position is expressed, for example, by pixel coordinates on a video. Specifically, the storage unit 600 stores therein the second machine learning model by storing parameters that define the second machine learning model therein. The second machine learning model is, for example, set in advance by a user. The second machine learning model may be, for example, obtained by the obtaining unit 601.

The storage unit 600 has, for example, a third machine learning model stored therein. The third machine learning model has, for example, a function to output the position of an object captured on a video in response to an input of the video. The object is, for example, an object different from persons. Specifically, the object is an object that may be carried by a person. Specifically, the object is an object that may be held by a hand of a person. More specifically, the object is a bag, a rucksack, an umbrella, a jacket, a magazine, a batch of documents, a tool, a telephone receiver, a smartphone, or the like. The third machine learning model has, for example, a function of outputting the position of an object in a frame of the video in response to an input of the frame. The position is expressed, for example, by pixel coordinates on the frame. The pixel coordinates indicate a position in units of pixels in the vertical direction of the frame and a position in units of pixels in the horizontal direction of the frame. The third machine learning model is, for example, an AI model. It is conceivable that the third machine learning model is realized, for example, by pattern matching. It is also conceivable that the third machine learning model is realized, for example, by a neural network, a mathematical expression, or a tree structure. Specifically, the storage unit 600 stores therein the third machine learning model by storing parameters that define the third machine learning model therein. The third machine learning model is, for example, set in advance by a user. The third machine learning model may be, for example, obtained by the obtaining unit 601.

The storage unit 600 stores therein reference information that enables the comparison processing. The storage unit 600 stores therein, for example, characteristics information indicating characteristics related to the gait of a specific person associated with the specific person. For example, there may be multiple specific persons. The characteristics information is, for example, a characteristics vector. The characteristics information is, for example, generated by the second machine learning model, on the basis of a reference video in which the specific person is captured. The reference video is, for example, a sample video to be used in comparison processing of the target person. The reference video is, for example, a video in which the gait of the specific person is captured. Specifically, the reference video is a video in which the gait of the specific person in the normal state is captured. The normal state is, for example, a state in which the target person is natural. The normal state is, for example, a state in which the target person is empty-handed. The characteristics information is, for example, obtained by the obtaining unit 601. The characteristics information may be, for example, generated by the specifying unit 604. Specifically, the storage unit 600 stores therein the characteristics information management table 400 depicted in FIG. 4.

The obtaining unit 601 obtains various types of information to be used in processing by each of the functional units. The obtaining unit 601 stores the obtained various types of information in the storage unit 600 or outputs the information to the functional units. The obtaining unit 601 may output the various types of information stored in the storage unit 600 to the functional units. The obtaining unit 601 obtains the various types of information, for example, on the basis of an operation input by a user. The obtaining unit 601 may receive the various types of information, for example, from a device different from the information processing device 100.

The obtaining unit 601 obtains, for example, a machine learning model. Specifically, the obtaining unit 601 obtains the first machine learning model. More specifically, the obtaining unit 601 obtains the first machine learning model by accepting on the basis of an operation input by a user, an input of the parameters that define the first machine learning model. More specifically, the obtaining unit 601 may obtain the first machine learning model by receiving the parameters that define the first machine learning model from another computer.

Specifically, the obtaining unit 601 obtains the second machine learning model. More specifically, the obtaining unit 601 obtains the second machine learning model by accepting an input of the parameters that define the second machine learning model on the basis of an operation input by a user. More specifically, the obtaining unit 601 may obtain the second machine learning model by receiving the parameters that define the second machine learning model from another computer.

Specifically, the obtaining unit 601 obtains the third machine learning model. More specifically, the obtaining unit 601 obtains the third machine learning model by accepting an input of the parameters that define the third machine learning model, on the basis of an operation input by a user. More specifically, the obtaining unit 601 may obtain the third machine learning model by receiving the parameters that define the third machine learning model from another computer.

The obtaining unit 601 obtains, for example, a video that includes multiple frames in which a person is captured. Specifically, the obtaining unit 601 obtains a target video that includes multiple frames in which the target person is captured. More specifically, the obtaining unit 601 obtains a target video that includes multiple frames in which the target person is captured, by receiving the target video that includes the multiple frames in which the target person is captured, from another computer. More specifically, the obtaining unit 601 may obtain a target video that includes multiple frames in which the target person is captured, by accepting an input of the target video including the multiple frames in which the target person is captured, on the basis of an operation input by a user.

Specifically, the obtaining unit 601 may obtain a target video that includes multiple frames in which multiple persons that may be the target person are captured. More specifically, the obtaining unit 601 obtains a target video that includes multiple frames in which multiple persons are captured, by receiving from another computer, the target video that includes the multiple frames in which the multiple persons are captured. More specifically, on the basis of an operation input by a user, the obtaining unit 601 may obtain a target video that includes multiple frames in which multiple persons are captured, by accepting an input of the target video that includes the frames in which the persons are captured.

Specifically, after obtaining the target video including the multiple frames in which the multiple persons are captured, the obtaining unit 601 may accept a designation of the target person among the persons captured on the target video. More specifically, the obtaining unit 601 may accept a designation of the target person by receiving from another computer, information that designates the target person among the persons captured on the target video. More specifically, the obtaining unit 601 may accept a designation of the target person on the basis of an operation input by a user.

Specifically, the obtaining unit 601 may obtain a reference video that includes multiple frames in which a specific person is captured. Specifically, when the characteristics information indicating characteristics related to the gait of a specific person is generated by the device of the obtaining unit 601, the obtaining unit 601 obtains a reference video that includes multiple frames in which the specific person is captured, which is used to generate the characteristics information. More specifically, the obtaining unit 601 may obtain the reference video that includes the multiple frames in which the specific person is captured, by receiving from another computer, the reference video that includes the frames in which the specific person is captured. More specifically, by accepting an input of the reference video that includes the frames in which the specific person is captured, the obtaining unit 601 may obtain, on the basis of an operation input by a user, the reference video that includes the multiple frames in which the specific person is captured.

Specifically, the obtaining unit 601 may obtain a reference video that includes multiple frames in which multiple persons that may be the specific person are captured. More specifically, the obtaining unit 601 may obtain a reference video that includes multiple frames in which multiple persons are captured, by receiving from another computer, the reference video that includes the frames in which the persons are captured. More specifically, on the basis of an operation input by a user, the obtaining unit 601 may accept an input of a reference video that includes multiple frames in which multiple persons are captured and thereby, may obtain a reference video having the frames in which the persons are captured.

Specifically, after obtaining the reference video that includes the multiple frames in which the multiple persons are captured, the obtaining unit 601 may accept a designation of the specific person among the persons captured on the reference video. More specifically, the obtaining unit 601 may accept a designation of the specific person by receiving from another computer, information that designates the specific person among the multiple persons captured on the reference video. More specifically, the obtaining unit 601 may accept a designation of the specific person on the basis of an operation input by a user.

The obtaining unit 601 may obtain, for example, the type of an object of which the positional relation with a part is referred to at the time of comparison processing. Specifically, the obtaining unit 601 may obtain the type of an object by accepting a designation of the type of the object on the basis of an operation input by a user. Specifically, the obtaining unit 601 may obtain the type of an object by receiving from another computer, information that designates the type of the object.

The obtaining unit 601 may accept a start trigger to start processing of any one of the functional units. The start trigger is, for example, a predetermined operation input by a user. The start trigger may be, for example, a reception of predetermined information from another computer. The start trigger may be, for example, an output of predetermined information from any one of the functional units. The obtaining unit 601 may, for example, accept an acquisition of a target video as a start trigger to start processing of the first detecting unit 602, the second detecting unit 603, the specifying unit 604, and the comparing unit 605.

The first detecting unit 602 detects the positions of parts of a person on a video. The first detecting unit 602 detects, for example, the position of each of multiple parts of the target person on a target video obtained by the obtaining unit 601, on the basis of the target video. The first detecting unit 602 detects, for example, the position of each part of the target person in each frame of a target video obtained by the obtaining unit 601, on the basis of the target video. Specifically, with respect to each of frames of a target video, the first detecting unit 602 inputs the frame to the first machine learning model to detect the position of each part of the target person in the frame. Accordingly, the first detecting unit 602 may obtain information providing a clue to specify frames that may be noise at the time of comparison processing among the multiple frames. Furthermore, the first detecting unit 602 enables characteristics related to the gait of the target person to be analyzed and enables generation of information to be referred to at the time of the comparison processing.

The first detecting unit 602 may detect, for example, the position of each of multiple parts of a specific person on a reference video obtained by the obtaining unit 601, on the basis of the reference video. The first detecting unit 602 may detect, for example, the position of each part of a specific person in each frame of a reference video obtained by the obtaining unit 601, on the basis of the reference video. Specifically, with respect to each frame of a reference video, the first detecting unit 602 detects the position of each part of a specific person in the frame by inputting the frame to the first machine learning model. Accordingly, the first detecting unit 602 enables characteristics related to the gait of a specific person to be analyzed and enables generation of information to be referred to at the time of comparison processing.

The second detecting unit 603 detects the position of an object on a video. The second detecting unit 603 detects, for example, the position of an object on a target video obtained by the obtaining unit 601, on the basis of the target video. The object is, for example, an object different from the target person. The object is, for example, an object of a type of which the designation has been accepted. The object is, for example, an object of a type set in advance. The second detecting unit 603 detects, for example, the position of an object in each frame of a target video obtained by the obtaining unit 601, on the basis of the target video. Specifically, with respect to each frame of a target video, the second detecting unit 603 detects the position of an object in the frame by inputting the frame to the third machine learning model. Accordingly, the second detecting unit 603 may detect an object that may have an impact on the gait of the target person and may obtain information providing a clue to specify frames that may be noise at the time of comparison processing among the multiple frames.

The specifying unit 604 specifies one or more frames on the basis of a positional relation between the detected position of the object and the position of at least one of multiple parts of the target person on a target video. The certain part is, for example, a part such as hands. The certain part is, for example, a part such as the right hand or the left hand. On the basis of the positional relation between the position of the object and the position of the part, the specifying unit 604 specifies among the multiple frames, one or more frames excluding frames in which a correlation is seen between movement of the object and movement of the part.

For example, the specifying unit 604 specifies one or more frames excluding frames in which a correlation is seen between the movement of the object and the movement of the part, on the basis of a similarity between the detected position of the object and the position of the part in each frame. The similarity is, for example, the reciprocal of the distance between the positions. Specifically, when the similarity between the detected position of the object and the position of the part in a frame is equal to or higher than a threshold value, the specifying unit 604 determines that the frame is a frame in which a correlation is seen between the movement of the object and the movement of the part. Specifically, when the similarity between the detected position of the object and the position of the part in a frame is lower than the threshold value, the specifying unit 604 determines that the frame is not a frame in which a correlation is seen between the movement of the object and the movement of the part.

More specifically, when the similarity between the detection position of the object and the position of a part (the right hand) in a frame is equal to or higher than the threshold value, the specifying unit 604 determines that the part (the right hand) is a part having a correlation in movement with the object. Accordingly, more specifically, when the similarity between the detected position of the object and the position of the part (the right hand) is equal to or higher than the threshold value in a frame, the specifying unit 604 determines that the frame is a frame in which a correlation is seen between the movement of the object and the movement of the part.

More specifically, when the similarity between the detected position of the object and the position of the part (the right hand) in a frame is lower than the threshold value, the specifying unit 604 determines that the part (the right hand) is not a part having a correlation in movement with the object. Accordingly, more specifically, when the similarity between the detected position of the object and the position of the part (the right hand) in a frame is lower than the threshold value, the specifying unit 604 determines that the frame is not a frame in which a correlation is seen between the movement of the object and the movement of the part.

Specifically, the specifying unit 604 specifies one or more frames excluding frames in which a correlation is seen between the movement of the object and the movement of the part, among the multiple frames. Specifically, the specifying unit 604 may specify a predetermined number of consecutive frames excluding frames in which a correlation is seen between the movement of the object and the movement of the part, among the multiple frames. The predetermined number is set in advance by a user. The predetermined number is, for example, the number of frames that enables calculation of characteristics information indicating characteristics of the gait, or that enables ensuring a generation accuracy of the characteristics information indicating characteristics of the gait. Accordingly, the specifying unit 604 may specify frames that may be noise at the time of comparison processing among the multiple frames. By specifying the predetermined number of frames, the specifying unit 604 may facilitate ensuring the generation accuracy of the characteristics information indicating characteristics of the gait.

For example, on the basis of the positional relation between the detected position of the object and the position of the part (hands) on a target video, the specifying unit 604 specifies among the multiple frames, one or more frames excluding frames in which a correlation is seen between the movement of the object and the movement of the part (hands). In other words, on the basis of the positional relation between the detected position of the object and the position of the part (hands) on the target video, the specifying unit 604 specifies among the multiple frames, one or more frames excluding frames in which the target person is determined as to be carrying the object.

Specifically, on the basis of the similarity between the detected position of the object and the position of the part (hands) in each frame, the specifying unit 604 determines whether the target person is carrying the object. The similarity is, for example, the reciprocal of the distance between the positions. Specifically, when determining that the target person is carrying the object in a frame, the specifying unit 604 determines that the frame is a frame in which a correlation is seen between the movement of the object and the movement of the part. Specifically, when determining that the target person is not carrying the object in a certain frame, the specifying unit 604 determines that the frame is not a frame in which a correlation is seen between the movement of the object and the movement of the part.

More specifically, when the similarity between the detected position of the object and the position of the part (hands) is equal to or higher than the threshold value in a frame, the specifying unit 604 determines that the target person is carrying the object. More specifically, when determining that the target person is carrying the object in a frame, the specifying unit 604 determines that the frame is a frame in which a correlation is seen between the movement of the object and the movement of the part.

More specifically, when the similarity between the detected position of the object and the position of the part (hands) in a frame is lower than the threshold value, the specifying unit 604 determines that the target person is not carrying the object. More specifically, when determining that the target person is not carrying the object in a frame, the specifying unit 604 determines that the frame is not a frame in which a correlation is seen between the movement of the object and the movement of the part.

Specifically, among the multiple frames, the specifying unit 604 specifies one or more frames excluding frames in which a correlation is seen between the movement of the object and the movement of the part. Specifically, the specifying unit 604 may specify a predetermined number of consecutive frames excluding frames in which a correlation is seen between the movement of the object and the movement of the part, among the multiple frames. Accordingly, the specifying unit 604 may detect that the position of the part (hands) is different from the position of the part (hands) in the normal gait of the target person due to the object in a frame and may detect that the frame may be noise at the time of comparison processing. Therefore, the specifying unit 604 may specify frames that may be noise at the time of comparison processing among the multiple frames.

The specifying unit 604 specifies one or more of the multiple frames, for example, on the basis of a positional relation between time series of the detected position of the object and time series of the position of at least one of the multiple parts. For example, on the basis of the positional relation between the time series of the position of the object and the time series of the position of a part among the multiple parts, the specifying unit 604 specifies among the multiple frames, one or more frames excluding frames in which a correlation is seen between the movement of the object and the movement of the part.

Specifically, the specifying unit 604 calculates a similarity between statistical characteristics of the time series of the detected position of the object and statistical characteristics of the time series of the position of the part. Specifically, on the basis of the calculated similarity, the specifying unit 604 specifies among the multiple frames, one or more frames excluding frames in which a correlation is seen between the movement of the object and the movement of the part. The similarity is, for example, the reciprocal of the distance between loci indicating the time series. The similarity is, for example, the reciprocal of the difference between variances related to the time series.

More specifically, the specifying unit 604 calculates, for each combination of two or more consecutive frames, the similarity between the statistical characteristics of the time series of the detected position of the object and the statistical characteristics of the time series of the position of the part in the combination. More specifically, when the calculated similarity for a combination is equal to or higher than a threshold value, the specifying unit 604 determines that two or more frames of the combination are frames in which a correlation is seen between the movement of the object and the movement of the part. More specifically, when the calculated similarity for a combination is lower than the threshold value, the specifying unit 604 determines that two or more frames of the combination are not frames in which a correlation is seen between the movement of the object and the movement of the part.

Specifically, the specifying unit 604 specifies one or more frames excluding frames in which a correlation is seen between the movement of the object and the movement of the part, among the multiple frames. Specifically, the specifying unit 604 may specify a predetermined number of consecutive frames not including the frames in which a correlation is seen between the movement of the object and the movement of the part, among the multiple frames. Accordingly, the specifying unit 604 may facilitate accurate detection of an instance in which the position of a part is different from the position of a part (hands) in the normal gait of the target person in consideration of the time series of the position of the part and the times series of the position of the object. Therefore, the specifying unit 604 may facilitate accurate specification of frames that may be noise at the time of comparison processing, among multiple frames.

The specifying unit 604 may, for example, calculate variance of relative coordinates of the position of at least one of the multiple parts with respect to a reference position on the target video. The reference position is, for example, the position of a specific part of the target person on the target video. The specific part is, for example, a part (the waist or the head). The reference position may be, for example, the position of a specific object on the target video. The variance is, for example, variance in an x-axis direction and variance in a y-axis direction. The x-axis is one of axes on a video. The y-axis is the other axis crossing the x-axis on the video. The variance may be, for example, standard deviation. For example, the specifying unit 604 may calculate, for each combination of two or more consecutive frames, variance of relative coordinates of at least one of the multiple parts with respect to the reference position in the combination.

The specifying unit 604 may specify, for example, one or more frames excluding frames in which a correlation is seen between the movement of the object and the movement of the part, on the basis of the positional relation between the detected position of the object and the position of the part, and the calculated variance. Specifically, the specifying unit 604 specifies among the multiple frames, one or more frames excluding frames in which a correlation is seen between the movement of the object and the movement of the part, on the basis of the similarity between the detected position of the object and the position of the part, and the calculated variance. The similarity is, for example, the reciprocal of the distance between the positions.

More specifically, the specifying unit 604 calculates, for each combination of two or more consecutive frames, the similarity between statistical characteristics of the time series of the detected position of the object and statistical characteristics of the time series of the position of the part in the combination. More specifically, the specifying unit 604 determines whether the calculated similarity is at least equal to a first threshold value for a combination. More specifically, when the calculated similarity is lower than the first threshold value in a combination, the specifying unit 604 determines that the two or more frames in the combination are not frames in which a correlation is seen between the movement of the object and the movement of the part.

More specifically, when the calculated similarity is equal to or higher than the first threshold value in the combination, the specifying unit 604 further determines whether the calculated variance is at least equal to a second threshold value. More specifically, when the similarity is equal to or higher than the first threshold value and when the variance is smaller than the second threshold value in the combination, the specifying unit 604 determines that the two or more frames of the combination are frames in which a correlation is seen between the movement of the object and the movement of the part.

More specifically, the specifying unit 604 may calculate the similarity between the detected position of the object and the position of the part (hands) on the target video in each frame. More specifically, the specifying unit 604 determines whether the similarity between the detected position of the object and the position of the part (hands) on the target video in each frame is at least equal to the first threshold value. More specifically, the specifying unit 604 determines whether calculated variance in the entire target video is at least equal to the second threshold value.

More specifically, when the similarity is equal to or higher than the first threshold value and the variance is smaller than the second threshold value in a frame, the specifying unit 604 determines that the frame is a frame in which a correlation is seen between the movement of the object and the movement of the part. More specifically, when the similarity is lower than the first threshold value or when the variance is equal to or larger than the second threshold value in a frame, the specifying unit 604 determines that the frame is not a frame in which a correlation is seen between the movement of the object and the movement of the part.

Specifically, the specifying unit 604 specifies one or more frames excluding frames in which a correlation is seen between the movement of the object and the movement of the part, among the multiple frames. Specifically, the specifying unit 604 may specify a predetermined number of consecutive frames excluding frames in which a correlation is seen between the movement of the object and the movement of the part, among the multiple frames. Accordingly, the specifying unit 604 may facilitate accurate detection of an instance in which the position of the part is different from the position of the part (hands) in the normal gait of the target person in consideration of variance of the position of the part. Therefore, the specifying unit 604 may facilitate accurate specification of frames that may be noise at the time of comparison processing, among the multiple frames.

The comparing unit 605 performs comparison processing of the target person. The comparison processing is, for example, determining whether the target person matches a specific person. The comparing unit 605 performs the comparison processing of the target person, for example, on the basis of one or more specified frames. Specifically, the comparing unit 605 performs the comparison processing of the target person on the basis of characteristics related to temporal changes in the positions of the multiple parts in the specified one or more frames.

More specifically, the comparing unit 605 generates first characteristics information related to the gait of the target person by inputting the positions of multiple parts of the target person on the specified one or more frames to the second machine learning model. More specifically, the comparing unit 605 performs the comparison processing of the target person on the basis of the generated first characteristics information.

More specifically, the comparing unit 605 refers to the storage unit 600 to read second characteristics information related to the gait of a specific person. More specifically, the comparing unit 605 performs the comparison processing of the target person on the basis of a similarity between the generated first characteristics information and the read second characteristics information. The similarity is an index value indicating the magnitude of a difference between the characteristics information. More specifically, when the similarity between the generated first characteristics information and the read second characteristics information is equal to or higher than a threshold value, the comparing unit 605 determines that the target person matches the specific person. More specifically, when the similarity between the generated first characteristics information and the read second characteristics information is lower than the threshold value, the comparing unit 605 determines that the target person does not match the specific person. Accordingly, the comparing unit 605 may accurately perform the comparison processing.

The comparing unit 605 may perform the comparison processing of the target person on the basis of characteristics related to silhouettes of multiple parts of the target person in the specified one or more frames. The silhouettes of parts may be recognized, for example, by a recognition method called "segmentation". For example, the comparing unit 605 generates first frequency-domain characteristics related to the silhouettes of multiple parts of the target person in one or more frames and second frequency-domain characteristics related to the silhouettes of the parts of a specific person. The comparing unit 605 performs the comparison processing of the target person, for example, on the basis of a result of a comparison between the first frequency-domain characteristics and the second frequency-domain characteristics. Accordingly, the comparing unit 605 may accurately perform the comparison processing.

The comparing unit 605 generates characteristics information related to the gait of a specific person on a reference video, on the basis of the positions of multiple parts of the specific person. The comparing unit 605 generates the characteristics information related to the gait of a specific person, for example, by inputting to the second machine learning model, the positions of the parts of the specific person in each frame of the reference video. Accordingly, the comparing unit 605 may analyze the characteristics related to the gait of a specific person and may generate information to be referred to at the time of performing the comparison processing. The comparing unit 605 may generate in advance the information to be referred to at the time of performing the comparison processing and store the generated information to the storage unit 600.

The output unit 606 outputs a processing result of at least any of the functional units. The form of output is, for example, display on a display, print output by a printer, transmission to an external device through the network I/F 303, or storage to a storage area of the memory 302 or the recording medium 305. Accordingly, the output unit 606 enables notification of the processing result of at least any of the functional units to a user and may improve convenience of the information processing device 100.

The output unit 606 outputs a processing result of the comparison processing. The output unit 606 outputs the processing result of the comparison processing, for example, to the client device 202. The output unit 606 outputs the processing result of the comparison processing, for example, to enable a user to refer to the result. Specifically, the output unit 606 displays the processing result of the comparison processing on the display 306 to be referred to by a user. Accordingly, the output unit 606 enables use of the processing result of the comparison processing.

While a case where the information processing device 100 includes the obtaining unit 601, the first detecting unit 602, the second detecting unit 603, the specifying unit 604, the comparing unit 605, and the output unit 606 is explained above, the information processing device 100 is not limited thereto. For example, configuration may be such that the information processing device 100 does not include some of the functional units and is communicable with other computers that have the corresponding functional units.

Specifically, a case where the information processing device 100 does not include the first detecting unit 602 is conceivable. In this case, it is conceivable that the obtaining unit 601 receives information indicating the position of a part of a person in each frame of a video from another computer that has the first detecting unit 602 to detect the position of this part of the person in each frame of the video.

Specifically, a case where the information processing device 100 does not include the second detecting unit 603 is conceivable. In this case, configuration may be such that the obtaining unit 601 receives information indicating the position of an object in each frame of a video from another computer including the second detecting unit 603 to detect the position of the object in each frame of the video.

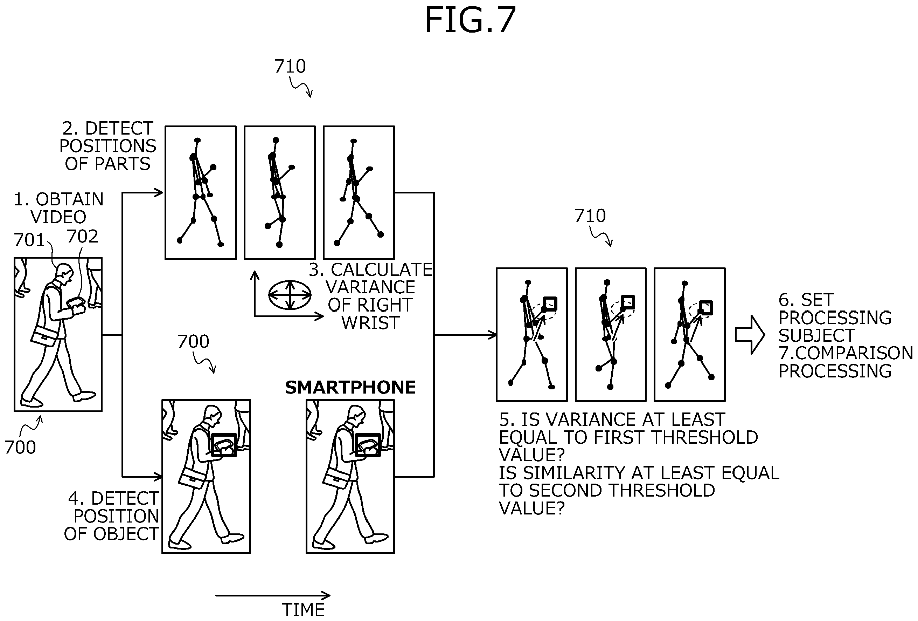

A flow of operations of the information processing device 100 is explained next with reference to FIG. 7.

FIG. 7 is an explanatory diagram depicting a flow of operations of the information processing device 100. In FIG. 7, (7-1) the information processing device 100 obtains a video 700 in which a target person is captured. The video 700 includes, for example, multiple frames in which the target person is captured. The video 700 may be, for example, made by clipping, as a new frame, a region of a certain size in which a target person 701 is captured from each frame of an entire video in which multiple persons are captured. Specifically, the video 700 includes multiple newly clipped frames in chronological order.

(7-2) The information processing device 100 detects the position of each part of the target person 701 in each frame of the video 700 on the basis of the video 700. The parts are, for example, the nose, the left eye, the right eye, the left ear, the right ear, the left shoulder, the right shoulder, the left elbow, the right elbow, the left wrist, the right wrist, the left side of the waist, the right side of the waist, the left knee, the right knee, the left ankle, and the right ankle. The position of a part is expressed, for example, by pixel coordinates. The information processing device 100 generates, for example, skeletal frame information 710 indicating the positions of the parts of the target person 701 in each frame of the video 700, on the basis of the detected positions.

(7-3) The information processing device 100 calculates variance of relative coordinates of the position of a part (the right wrist) with respect to a reference position. The reference position is, for example, the position of a part (the waist) of the target person 701. The position of a part (the waist) is, for example, the position of a part of the right side of the waist. The position of a part (the waist) may be, for example, the position of a part (the left side of the waist). The position of a part (the waist) may be, for example, the position of the center of the positions of parts (the right side and the left side of the waist). The information processing device 100 calculates, for example, variance of relative coordinates of the position of a part (the right wrist) with respect to the reference position in the entire video 700.

(7-4) In each frame of the video 700, the information processing device 100 detects on the basis of the video 700, the position of a specific object 702 that may be a belonging of the target person 701. The specific object 702 is a smartphone, or the like. In the example depicted in FIG. 7, the information processing device 100 detects the position of a smartphone in each frame of the video 700, on the basis of the video 700.

(7-5) The information processing device 100 determines whether the calculated variance is at least equal to a first threshold value. When the calculated variance is equal to or larger than the first threshold value, the information processing device 100 determines that an impact caused by the specific object 702 upon the position of the part (the right wrist) of the target person 701 on the video 700 is relatively small. Accordingly, when the calculated variance is equal to or larger than the first threshold value, the information processing device 100 determines that each frame of the video 700 is not a frame that may be noise at the time of the comparison processing.

When the calculated variance is smaller than the first threshold value, the information processing device 100 calculates the similarity between the position of the part (the right wrist) of the target person 701 and the position of the specific object 702 in each frame of the video 700. The similarity is calculated on the basis a difference between the position of the part (the right wrist) of the target person 701 and the position of the specific object 702 in each frame of the video 700. The similarity is, for example, the reciprocal of the difference.

The information processing device 100 determines whether the calculated similarity is at least equal to a second threshold value in each frame of the video 700. When the calculated similarity in a frame is lower than the second threshold value, the information processing device 100 determines that the impact caused by the specific object 702 upon the position of the part (the right wrist) of the target person 701 on the video 700 is relatively small. Accordingly, when the calculated similarity in a frame is lower than the second threshold value, the information processing device 100 determines that the frame is not a frame that may be noise at the time of the comparison processing.

When the calculated similarity in a frame is equal to or higher than the second threshold value, the information processing device 100 determines that the probability of the target person 701 carrying the specific object 702 is relatively high. Accordingly, when the calculated similarity in a certain frame is equal to or higher than the second threshold value, the information processing device 100 determines that the impact caused by the specific object 702 upon the position of the part (the right wrist) of the target person 701 on the video 700 is relatively large. Therefore, when the calculated similarity in a frame is equal to or higher than the second threshold value, the information processing device 100 determines that the frame is a frame that may be noise at the time of the comparison processing and sets the frame as an excluded frame.

(7-6) The information processing device 100 sets one or more frames of the video 700, except excluded frames, as processing subjects of the comparison processing. For example, the information processing device 100 may set a predetermined number of consecutive frames of the video 700, except excluded frames, as the processing subjects of the comparison processing. The predetermined number is, for example, set in advance by a user.

(7-7) The information processing device 100 generates the first characteristics information related to the gait of the target person 701, on the basis of the one or more frames set as the processing subjects. The information processing device 100 performs the comparison processing to determine whether the target person 701 matches a specific person by comparing the generated first characteristics information related to the gait of the target person 701 with the second characteristics information related to the gait of the specific person. Accordingly, the information processing device 100 may accurately perform the comparison processing.

While a case where the information processing device 100 calculates variance of relative coordinates of the position of the part (the right wrist) with respect to the reference position in the entire video 700 is explained above, the information processing device 100 is not limited thereto. For example, the information processing device 100 may calculate, for each frame of the video 700, variance of relative coordinates of the position of the part (the right wrist) with respect to the reference position in two or more consecutive frames including the associated frame.

Specifically, it is conceivable that the information processing device 100 calculates, for each frame of the video 700, variance of relative coordinates of the position of the part (the right wrist) with respect to the reference position in two or more consecutive frames including the associated frame and the subsequent frames. Specifically, it is also conceivable that the information processing device 100 calculates, for each frame of the video 700, variance of relative coordinates of the position of the part (the right wrist) with respect to the reference position in two or more consecutive frames including the associated frame and the preceding frames. Specifically, it is also conceivable that the information processing device 100 calculates, for each frame of the video 700, variance of relative coordinates of the position of the part (the right wrist) relative to the reference position in two or more consecutive frames including the associated frame and frames before and after the associated frame.

In this case, the information processing device 100 may calculates, for each frame of the video 700, the similarity between the position of the part (the right wrist) of the target person 701 in two or more consecutive frames that include the associated frame and the position of the specific object 702. The information processing device 100 determines whether the calculated variance is at least equal to the first threshold value and whether the calculated similarity is at least equal to the second threshold value for each frame of the video 700. This enables the information processing device 100 to determine for each frame of the video 700 whether the frame is a frame that may be noise at the time of the comparison processing. For example, since the information processing device 100 calculates variance individually for each frame of the video 700, the information processing device 100 may facilitate accurate determination for each frame of the video 700 whether the frame is a frame that may be noise at the time of the comparison processing.

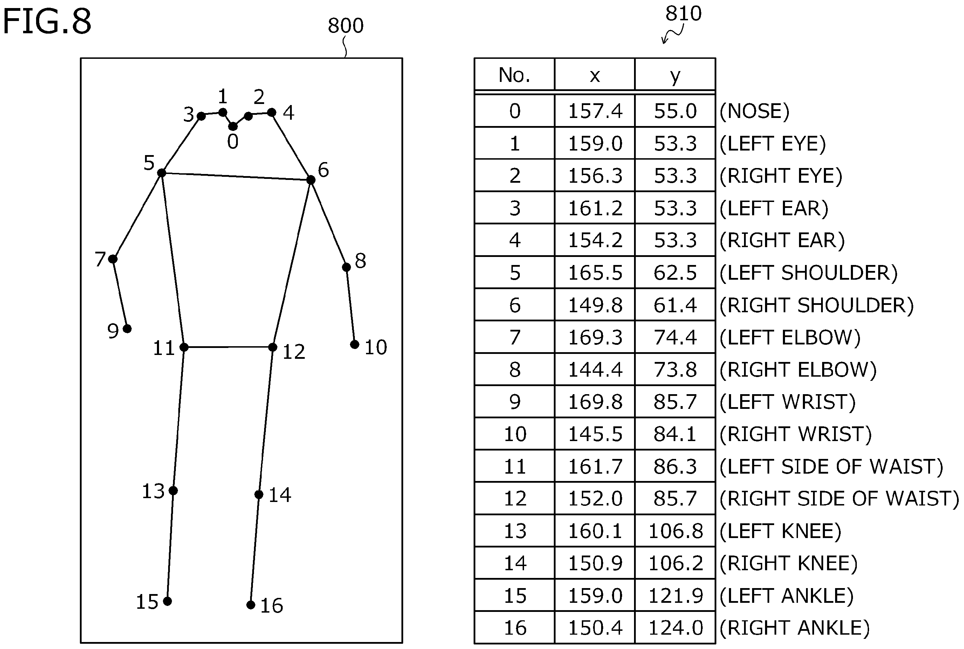

An example of an operation of the information processing device 100 is explained next with reference to FIGS. 8 to 15. An example in which the information processing device 100 obtains skeletal frame information indicating the position of each of multiple parts of a person and on the basis of the skeletal frame information, learns a machine learning model to be used in the comparison processing is explained first with reference to FIGS. 8 to 10. The machine learning model is, for example, a deep neural network (DNN). For example, GaitGraph may be applied to the DNN.

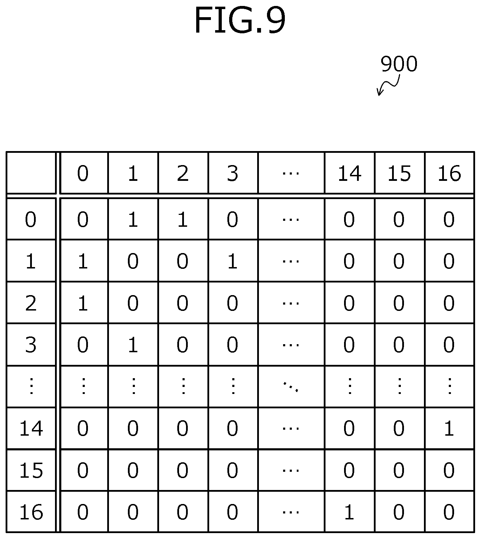

FIGS. 8 and 9 are explanatory diagrams depicting an example of obtaining skeletal frame information. In FIG. 8, the information processing device 100 obtains skeletal frame information indicating the position of each of 17 parts of a person in each frame of a reference video in which the person is captured. The 17 parts and a connection relation between the parts are shown by a graph 800.

The skeletal frame information includes, for example, a coordinate information management table 810 indicating the position of each of the 17 parts of the person in each frame of a video to be associated with the frame. As depicted in FIG. 8, the coordinate information management table 810 has fields for the number, x, and y. Information is set in associated fields for each of the parts, whereby coordinate information is stored to the coordinate information management table 810.

A number for identifying a part of a person is set in the field for the number. The x-axis component of coordinates indicating the position of the part of the person on a frame is set in the field for x. The unit of the x-axis component is, for example, a pixel. The y-axis component of the coordinates indicating the position of the part of the person on the frame is set in the field for y. The unit of the y-axis component is, for example, a pixel. FIG. 9 is explained next.

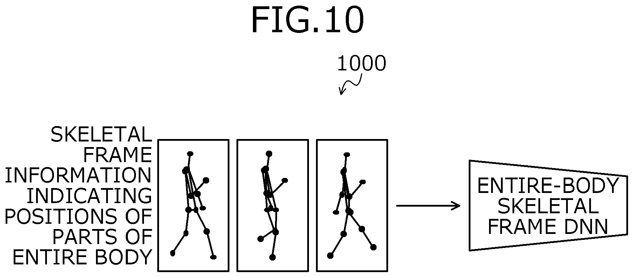

As depicted in FIG. 9, the information processing device 100 stores therein a table 900 indicating a connection relation of the parts. The table 900 is, for example, common to different frames. The table 900 may be, for example, common to different persons. In the table 900, row numbers and column numbers correspond to the numbers of the parts, respectively. A combination of a row number and a column number indicates a combination of parts. When a combination of parts are connected to each other, flag information=1 is set in the element corresponding to the combination of the row number and the column number corresponding to the combination of the parts. When a combination of parts are not connected to each other, flag information=0 is set in the element corresponding to a combination of the row number and the column number corresponding to the combination of the parts. FIG. 10 is explained next.

FIG. 10 is an explanatory diagram depicting an example of learning a machine learning model. In FIG. 10, the information processing device 100 learns an entire-body skeletal frame DNN using obtained skeletal frame information 1000. The entire-body skeletal frame DNN has a function to output a characteristics vector related to the gait of a person according to the positions of the 17 parts in the entire body of this person in one or more frames. Accordingly, the information processing device 100 enables calculation of a characteristics vector related to the gait of a person.

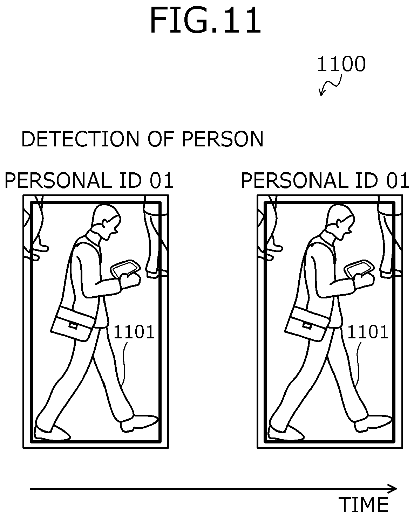

An example in which the information processing device 100 detects a person captured on an obtained video is explained next with reference to FIG. 11. The person may be a target of the comparison processing.

FIG. 11 is an explanatory diagram depicting an example of detecting a person. In FIG. 11, the information processing device 100 obtains a video. The information processing device 100 detects persons captured on each frame of the obtained video. For example, a detection technology called "Yolo" and a tracking technology called "DeepSORT" may be applied to the detection of persons. For example, the information processing device 100 assigns a same personal ID to persons that are captured on frames of the obtained video and that are recognized as a same person on the basis of clothes or the like.

The information processing device 100 sets a person 1101 among the detected persons as a target person. For example, the information processing device 100 sets the person 1101 of a personal ID 01 as the target person. From each frame of the obtained video, the information processing device 100 clips a region of a prescribed size in which the set target person is captured, adopts the region as a new frame, and generates a frame group 1100 that includes the adopted new frames arranged in chronological order. Accordingly, the information processing device 100 enables the comparison processing to be performed focused on any person captured on a video.

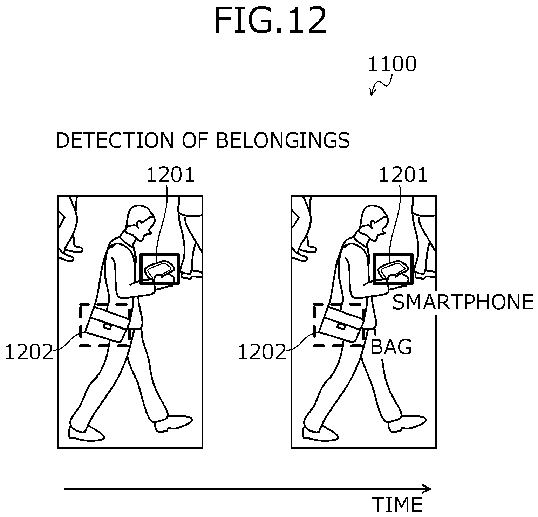

An example in which the information processing device 100 detects belongings captured on each of the frames in the frame group 1100 is explained next with reference to FIG. 12.

FIG. 12 is an explanatory diagram depicting an example of detecting belongings. In FIG. 12, the information processing device 100 detects objects that are captured on each frame of the frame group 1100 and that may be belongings, and the information processing device 100 detects the position of each of the objects. For example, the detection technology called "Yolo" and the tracking technology called "DeepSORT" may be applied to the detection of objects. The information processing device 100 sets the detected objects as candidates of belongings. In the example depicted in FIG. 12, it is assumed that the information processing device 100 detects a smartphone 1201 and a bag 1202.

Accordingly, the information processing device 100 may detect candidates of belongings that may impact the gait of the target person. The information processing device 100 enables determination on whether movement of the positions of parts of the target person and movement of the positions of the candidates of belonging have a correlation. Accordingly, the information processing device 100 enables specification of frames that may be noise at the time of the comparison processing.

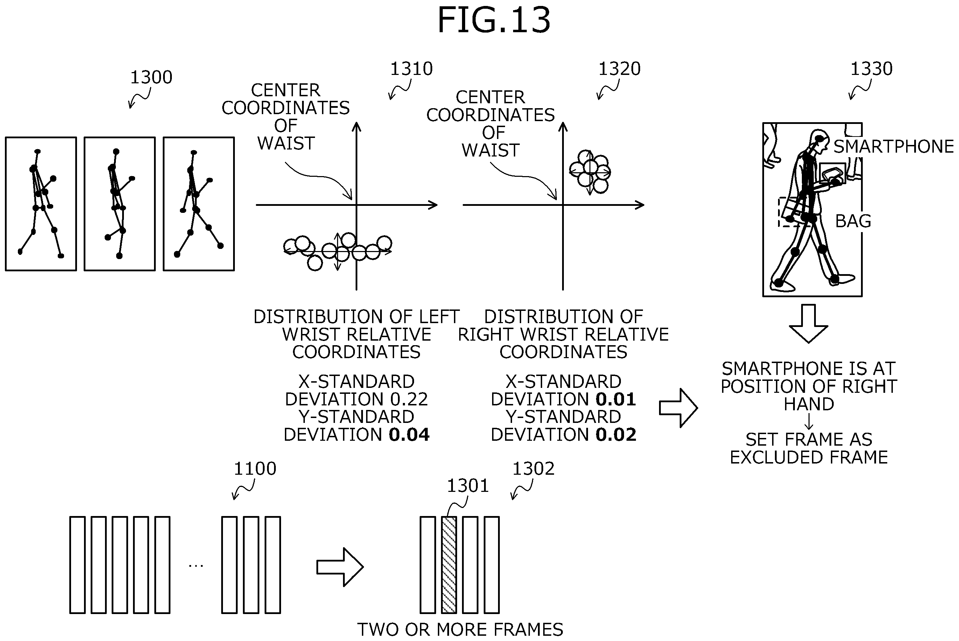

An example in which the information processing device 100 specifies frames to be eliminated is explained next with reference to FIG. 13.

FIG. 13 is an explanatory diagram depicting an example of specifying frames as excluded frames. In FIG. 13, the information processing device 100 detects the positions of multiple parts of the target person in each frame of the frame group 1100 and generates skeletal frame information 1300. For example, the information processing device 100 may detect the positions of the multiple parts normalized according to the size of the target person captured on each frame of the frame group 1100 and generate the skeletal frame information 1300.

Specifically, the information processing device 100 stores therein a machine learning model to output the positions of multiple parts of each person on a frame in response to an input of the frame. Specifically, the information processing device 100 detects the positions of the parts of the target person in each frame of the frame group 1100 by inputting each frame of the frame group 1100 to the machine learning model.

The information processing device 100 specifies the position of the center of parts (the left side and the right side of the waist) in each frame of the frame group 1100, on the basis of the skeletal frame information 1300 and sets the specified position as the position of a part (the waist). The information processing device 100 calculates, for each frame in the frame group 1100, an x-standard deviation and a y-standard deviation related to relative coordinates of the position of a part (the left wrist) with respect to the position of the part (the waist) in two or more consecutive frames including the associated frame, on the basis of the skeletal frame information 1300. The x-standard deviation is the standard deviation of the x-axis component in a distribution 1310 of the relative coordinates of the position of the part (the left wrist) with respect to the position of the part (the waist). The y-standard deviation is the standard deviation of the y-axis component in the distribution 1310 of the relative coordinates of the position of the part (the left wrist) with respect to the position of the part (the waist).

The information processing device 100 calculates, for each frame in the frame group 1100, an x-standard deviation and a y-standard deviation related to relative coordinates of the position of a part (the right wrist) with respect to the position of the part (the waist) in two or more consecutive frames including the associated frame, on the basis of the skeletal frame information 1300. The x-standard deviation is the standard deviation of the x-axis component in a distribution 1320 of the relative coordinates of the position of the part (the right wrist) with respect to the position of the part (the waist). The y-standard deviation is the standard deviation of the y-axis component in the distribution 1320 of the relative coordinates of the position of the part (the right wrist) with respect to the position of the part (the waist).

The information processing device 100 determines for each frame in the frame group 1100 whether the x-standard deviation and the y-standard deviation related to the part (the left wrist) are at least equal to a threshold value. The threshold value is, for example, 0.1. In the example depicted in FIG. 13, it is assumed that the information processing device 100 determines for a frame 1301 that the x-standard deviation related to the part (the left wrist) is larger than the threshold value. When the x-standard deviation related to the part (the left wrist) is larger than the threshold value in the frame 1301, the information processing device 100 determines that the movement of the part (the left wrist) is not hindered by objects in two or more frames 1302 including the frame 1301. In other words, when the x-standard deviation related to the part (the left wrist) is larger than the threshold value in the frame 1301, the information processing device 100 determines that the objects and the left wrist do not have a correlation in movement in the two or more frames 1302 including the frame 1301.

The information processing device 100 also determines for each frame in the frame group 1100 whether the x-standard deviation and the y-standard deviation related to the part (the right wrist) are at least equal to a threshold value. The threshold value is, for example, 0.1. In the example depicted in FIG. 13, it is assumed that the information processing device 100 determines for the frame 1301 that the x-standard deviation and the y-standard deviation related to the part (the right wrist) are smaller than the threshold value. It is assumed that, when the x-standard deviation and the y-standard deviation related to the part (the right wrist) are smaller than the threshold value in the frame 1301, the information processing device 100 further determines whether the detected objects hinder the movement of the part (the right wrist).

For example, when the x-standard deviation and the y-standard deviation related to the part (the right wrist) are smaller than the threshold value in the frame 1301, the information processing device 100 further determines whether the position of a detected object is relatively close to the position of the part (the right wrist). Specifically, the information processing device 100 calculates the average value of distances between the position of the detected bag and the position of the part (the right wrist) in the two or more frames 1302 including the frame 1301 as the similarity and determines whether the similarity is at least equal to a threshold value. The threshold value is, for example, set in advance. The threshold value is, for example, a distance corresponding to 10 pixels.

Specifically, when the similarity is equal to or higher than the threshold value, the information processing device 100 determines that the position of the detected object is relatively close to the position of the part (the right wrist) in the two or more frames 1302. Specifically, when the similarity is lower than the threshold value, the information processing device 100 determines that the position of the detected object is relatively far from the position of the part (the right wrist) in the two or more frames 1302. For example, when determining that the position of the detected object is relatively close to the position of the part (the right wrist), the information processing device 100 determines that the detected object hinders the movement of the part (the right wrist).

In the example depicted in FIG. 13, since the average value of the distances related to the bag is equal to or larger than the threshold value in the two or more frames 1302, the information processing device 100 determines that the bag does not hinder the movement of the part (the right wrist). On the other hand, since the average value of the distances related to the smartphone is smaller than the threshold value in the two or more frames 1302, the information processing device 100 determines that the smartphone hinders the movement of the part (the right wrist). Therefore, the information processing device 100 determines that the smartphone and the part (the right wrist) have a correlation in movement in the frame 1301 or the two or more frames 1302. The information processing device 100 sets the frame 1301 or the two or more frames 1302 where it is determined that the smartphone and the part (the right wrist) have a correlation in the movement, as an excluded frame of the comparison processing.

Accordingly, the information processing device 100 may determine that a frame 1301 or two or more frames 1302 are frames difficult to adopt as frames representing characteristics of the gait of the target person. Therefore, the information processing device 100 enables appropriate specification of frames to be used in the comparison processing.

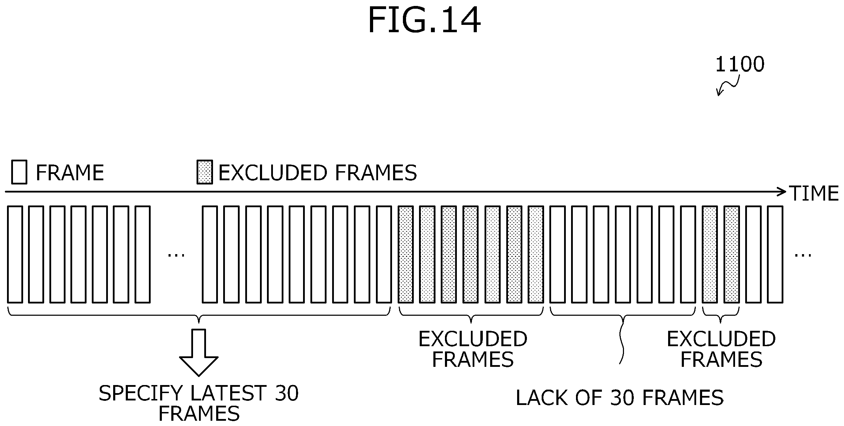

An example in which the information processing device 100 specifies one or more frames to be processed is explained next with reference to FIG. 14.

FIG. 14 is an explanatory diagram depicting an example of specifying one or more frames as processing subjects. In FIG. 14, the information processing device 100 specifies one or more frames in the frame group 1100, except frames that are set as an excluded frame, as the processing subject of the comparison processing. In the example depicted in FIG. 14, the frames set as an excluded frame are indicated by dotted hatching.

For example, the information processing device 100 specifies a predetermined number of frames in the frame group 1100 as the processing subject of the comparison processing. The predetermined number is, for example, 30. The predetermined number is, for example, the number of frames that enables ensuring the generation accuracy of the characteristics information that indicates characteristics of the gait. In the example depicted in FIG. 14, the information processing device 100 specifies, as the processing subject of the comparison processing, 30 consecutive frames in the frame group 1100, except for the frames set as an excluded frame.

Specifically, the information processing device 100 specifies, as the processing subject of the comparison processing, the latest 30 frames of a section that is positioned at the head in the frame group 1100 and that includes 30 or more frames. Specifically, as the processing subject of the comparison processing, the information processing device 100 may specify the last 30 frames of a section that, in the frame group 1100, is positioned at the head and includes 30 or more frames. Specifically, the information processing device 100 may receive, on the basis of an operation input by a user, a selection of 30 frames of a section that is positioned at the head in the frame group 1100 and includes 30 or more frames and specify the selected 30 frames as the processing subject of the comparison processing. Specifically, preferably configuration may be such that the information processing device 100 does not specify, as the processing subject of the comparison processing, frames of a section that is positioned at the tail of the frame group 1100 and that lacks 30 or more frames.

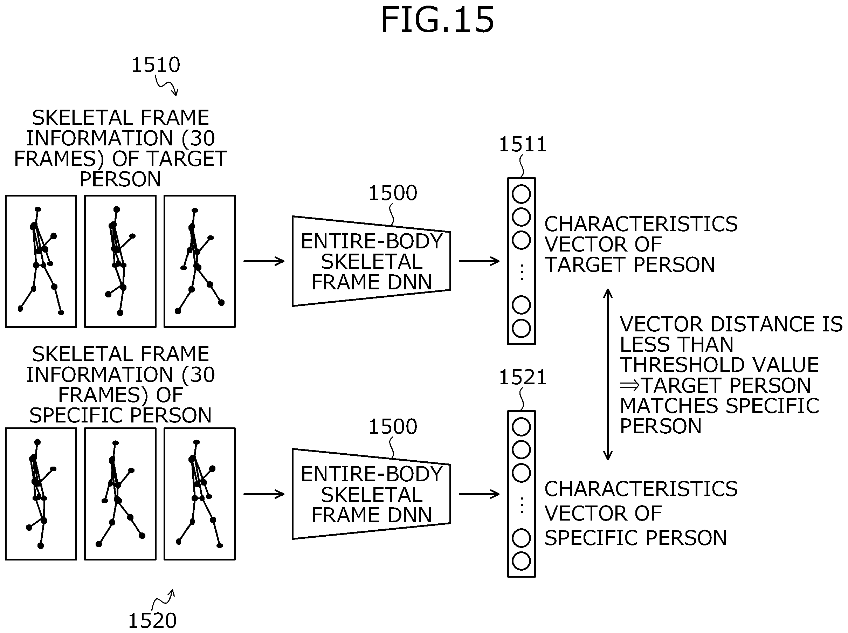

An example in which the information processing device 100 performs the comparison processing is explained next with reference to FIG. 15.

FIG. 15 is an explanatory diagram depicting an example of performing the comparison processing. In FIG. 15, the information processing device 100 extracts from the skeletal frame information 1300, information indicating the positions of multiple parts in one or more frames set as the processing subject and generates skeletal frame information 1510 that includes the extracted information indicating the positions of the multiple parts. The information processing device 100 generates a characteristics vector 1511 related to the gait of the target person by inputting the skeletal frame information 1510 to a learned entire-body skeletal frame DNN 1500.

The information processing device 100 obtains skeletal frame information 1520 that indicates the positions of multiple parts of a specific person as a candidate of the target person. The skeletal frame information 1520 may be generated on the basis of a video in which the specific person is captured. The information processing device 100 generates a characteristics vector 1521 related to the gait of the specific person by inputting the skeletal frame information 1520 to the learned entire-body skeletal frame DNN 1500.

The information processing device 100 calculates an inter-vector distance between the characteristics vector 1511 and the characteristics vector 1521. The distance represents the similarity between the gait of the target person and the gait of the specific person. The information processing device 100 determines whether the calculated inter-vector distance is at least equal to a threshold value. When the inter-vector distance is equal to or more than the threshold value, the information processing device 100 determines that the gait of the target person is not similar to the gait of the specific person and that the target person does not match the specific person. When the inter-vector distance is less than the threshold value, the information processing device 100 determines that the gait of the target person is similar to the gait of the specific person and that the target person matches the specific person.

Accordingly, the information processing device 100 may accurately perform the comparison processing. For example, the information processing device 100 may accurately determine whether a target person matches a specific person. Specifically, the information processing device 100 may appropriately select one or more frames accurately representing characteristics of the gait of a target person from the frame group 1100 and may improve the accuracy of the comparison processing.

Since the information processing device 100 specifies one or more frames, for example, on the basis of the positional relation between an object and a part, the information processing device 100 enables specification of one or more frames in a situation where a part is at a special position independently of an object. Accordingly, the information processing device 100 may be applied also to a case where a target person has a tendency to walk while maintaining a part at a special position independently of objects. Therefore, the information processing device 100 may improve the accuracy of the comparison processing.

For example, the information processing device 100 may accurately determine which of multiple specific persons a target person matches. Specifically, the information processing device 100 may determine whether a person captured in each of multiple videos matches a target person such as a missing person or a criminal suspect. Therefore, specifically, the information processing device 100 may facilitate a user to find among multiple videos, a video in which a target person such as a missing person or a criminal suspect appears. Accordingly, the information processing device 100 may facilitate a search for a missing person or a criminal suspect by a user such as a police officer and may support operations.

For example, the information processing device 100 may accurately determine which of multiple specific persons that are allowed to enter a place such as a building or a room, a target person matches. Therefore, specifically, the information processing device 100 may appropriately authenticate a target person that intends to enter a place such as a building or a room to appropriately control entry of the target person into a place such as a building or a room.

While a case where the information processing device 100 determines whether an object hinders the movement of a part (the right wrist or the left wrist) and whether the object and the part (the right wrist or the left wrist) have a correlation in movement, and specifies frames as an excluded frame has been described in the above explanations, the information processing device 100 is not limited thereto.

For example, the information processing device 100 may determine whether an object and a part (the head) have a correlation in movement to specify frames as an excluded frame. In this case, the information processing device 100 may determine, for example, whether an object such as a hat or a hood adversely impacts the detection accuracy of the position of a part (the head). The information processing device 100 may appropriately specify frames as an excluded frame considering that an object such as a hat or a hood may adversely impact the detection accuracy of the position of a part (the head). For example, the information processing device 100 may specify, as an excluded frame, a frame in a situation in which an object such as a hat or a hood adversely impacts the detection accuracy of the position of a part (the head). Therefore, the information processing device 100 may improve the accuracy of the comparison processing.

For example, the information processing device 100 may determine whether an object and a part (the waist) have a correlation in movement. In this case, the information processing device 100 may determine, for example, whether an object such as a bag adversely impacts the detection accuracy of the position of a part (the waist). The information processing device 100 may appropriately specify a frame as an excluded frame considering that an object such as a bag may adversely impact the detection accuracy of the position of a part (the waist). For example, the information processing device 100 may specify, as an excluded frame, a frame in a situation in which an object such as a bag adversely impacts the detection accuracy of the position of a part (the waist). Accordingly, the information processing device 100 may improve the accuracy of the comparison processing.

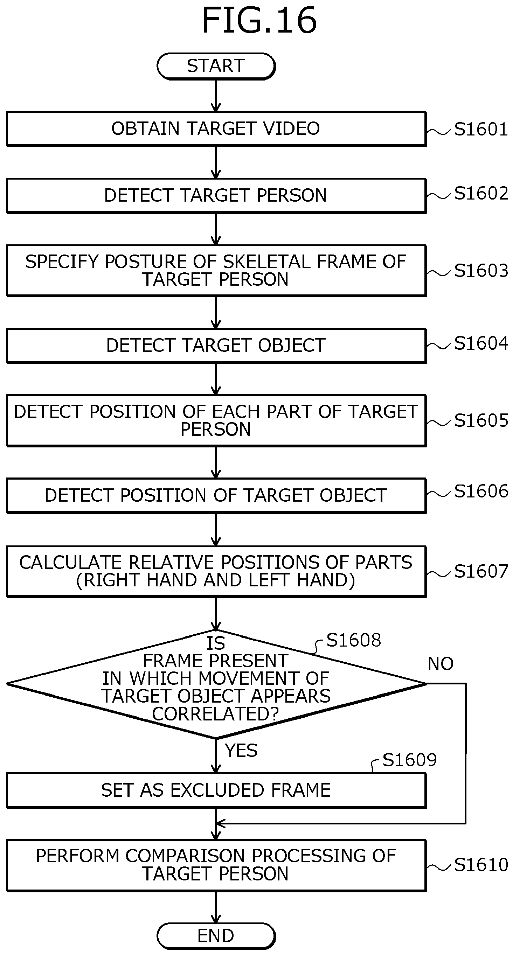

An example of an overall processing procedure performed by the information processing device 100 is explained next with reference to FIG. 16. The overall processing is realized, for example, by the CPU 301, a storage area such as the memory 302 and the recording medium 305, and the network I/F 303 depicted in FIG. 3.

FIG. 16 is a flowchart depicting an example of the overall processing procedure. In FIG. 16, the information processing device 100 obtains a target video (step S1601).

Next, the information processing device 100 detects a target person captured on each frame of the obtained target video (step S1602). The information processing device 100 specifies the posture of the skeletal frame of the target person captured on each frame of the obtained target video (step S1603). The information processing device 100 also detects a target object captured on each frame of the obtained target video (S1604).

Next, the information processing device 100 detects the positions of parts of the detected target person in each frame of the target video, on the basis of the posture of the skeletal frame of the target person (step S1605). The information processing device 100 detects the position of the detected target object in each frame of the target video, on the basis of the target object (step S1606). The information processing device 100 calculates relative positions of the positions of parts (the right hand and the left hand) with respect to the position of a reference part of the target person (step S1607).

Next, the information processing device 100 determines on the basis of the calculated relative positions, whether a frame is present in which movement of the target object appears correlated with movement of the part (the right hand or the left hand), among the frames of the video (step S1608). When a frame is present in which the movement of the target object appears correlated with the movement of the part (he right hand or the left hand) (step S1608: YES), the information processing device 100 proceeds to the process at step S1609. On the other hand, when no frame is present in which the movement of the target object appears correlated with the movement of the part (the right hand or the left hand) (step S1608: NO), the information processing device 100 proceeds to the process at S1610.

At step S1609, among the frames of the video, the information processing device 100 sets, as an excluded frame, the frame in which a correlation between the movement of the target object and the movement of the part (the right hand or the left hand) appears (step S1609). The information processing device 100 subsequently proceeds to the process at Step 1610.

At step S1610, the information processing device 100 performs the comparison processing of the target person on the basis of one or more frames other than the excluded frames (step S1610). The information processing device 100 then ends the overall processing. Accordingly, the information processing device 100 may accurately perform the comparison processing.

As described above, according to the information processing device 100, a video that includes a person may be obtained. According to the information processing device 100, an object included in the video may be detected by analyzing the obtained video. According to the information processing device 100, on the basis of a positional relation between the detected object and any one of multiple parts of the person, whether movement of the object and movement of the part have a correlation may be determined. According to the information processing device 100, when it is determined that the movement of the object and the movement of the part have a correlation, a first frame in which the correlation is seen among multiple frames constituting the video may be specified. According to the information processing device 100, comparison of the person may be performed using a second frame among the multiple frames excluding the first frame. Accordingly, the information processing device 100 may accurately perform the comparison processing of a target person.

According to the information processing device 100, a position of an object different from the person on the obtained video may be detected. According to the information processing device 100, a positional relation between the detected position of the object and a position of each of the multiple parts on the obtained video may be specified. According to the information processing device 100, one or more frames excluding the first frame in which a correlation is seen between movement of the object and movement of the part among the multiple frames may be adopted as the second frame. Accordingly, the information processing device 100 may accurately perform the comparison processing of a target person.

According to the information processing device 100, a position of each of the multiple parts on the obtained video may be detected by inputting the obtained video to a first machine learning model that outputs positions of parts of a person captured on a video, in response to an input of the video. According to the information processing device 100, a positional relation between the detected position of the object and the detected position of at least one of the multiple parts may be specified. According to the information processing device 100, one or more frames not including the first frame in which a correlation is seen between movement of the object and movement of the part, among the multiple frames may be adopted as the second frame. Accordingly, the information processing device 100 itself may detect the position of each of multiple parts on a target video and may facilitate an independent operation.

According to the information processing device 100, skeletal frame information of the person may be generated by analyzing the video. According to the information processing device 100, positions of bones or joints of the person may be specified using the generated skeletal frame information of the person. According to the information processing device 100, the positions of bones or joints of parts of a person may be adopted as the positions of the parts. Accordingly, the information processing device 100 may apply a method of detecting the positions of bones when the positions of parts of a target person are to be detected. The information processing device 100 may apply a method of using the positions of bones to the comparison processing.

According to the information processing device 100, positions of silhouettes of parts of a person may be adopted as the positions of the parts. Accordingly, the information processing device 100 may apply a method of detecting the position of a silhouette may be applied when the positions of parts of a target person are to be detected. The information processing device 100 may apply a method of using the position of a silhouette to the comparison processing.

According to the information processing device 100, on the basis of a positional relation between the detected object and a part (hands) on the obtained video, whether movement of the object and movement of the part (hands) have a correlation may be determined. According to the information processing device 100, when it is determined that movement of the object and movement of the part of the hands have a correlation, the first frame in which the correlation is seen among the multiple frames may be specified, one or more frames not including the specified first frame among the multiple frames may be specified, and the specified one or more frames may be set as the second frame. Accordingly, the information processing device 100 may improve the accuracy of the comparison processing considering whether a target person carries an object.

According to the information processing device 100, on the basis of a positional relation between time series of a position of the detected object and time series of a position of at least one of the multiple parts, whether movement of the object and movement of the part have a correlation may be determined. According to the information processing device 100, when it is determined that the movement of the object and the movement of the part have a correlation, the first frame in which the correlation is seen among the multiple frames may be specified, one or more frames not including the specified first frame among the multiple frames may be specified, and the specified one or more frames may be set as the second frame. Accordingly, the information processing device 100 may facilitate accurate specification of one or more frames considering the time series of the position of an object and the time series of the position of a part.

According to the information processing device 100, comparison of the person may be performed on the basis of characteristics related to temporal changes of positions of the multiple parts in the second frame. Accordingly, the information processing device 100 may facilitate accurately performing the comparison processing of a target person considering the temporal changes of the positions of parts.

According to the information processing device 100, variance of relative coordinates of a position of at least one of the multiple parts with respect to a reference position on the obtained video may be calculated. According to the information processing device 100, on the basis of a positional relation between a position of the detected object and a position of the part, and the calculated variance, whether movement of the object and movement of the part have a correlation may be determined. According to the information processing device 100, when it is determined that the movement of the object and the movement of the part have a correlation, the first frame in which the correlation is seen among the multiple frames may be specified, one or more frames not including the specified first frame among the multiple frames may be specified, and the specified one or more frames may be set as the second frame. Accordingly, the information processing device 100 may facilitate accurate determination on whether a part and an object have a correlation in the movement considering variance of the position of the part.

According to the information processing device 100, a position of a part (the waist) of the person on the obtained video may be adopted as the reference position. Accordingly, the information processing device 100 may use the position of a part (the waist) as a reference and may facilitate accurate determination on whether a part and an object have a correlation in the movement.

According to the information processing device 100, a characteristics vector related to gait of the person may be generated by inputting positions of the multiple parts on the second frame to a second machine learning model that outputs a characteristics vector related to gait of a person in response to an input of a position of a part of the person. According to the information processing device 100, comparison of the person may be performed on the basis of the generated characteristics vector. Accordingly, the information processing device 100 may obtain an index accurately representing characteristics of the gait of a target person and enables the comparison processing.

According to the information processing device 100, the characteristics vector related to gait of the specific person and generated by inputting positions of multiple parts of a specific person to the second machine learning model may be obtained. According to the information processing device 100, when it is determined that the generated characteristics vector related to the gait of the specific person is similar to the obtained characteristics vector related to the gait of the specific person, it may be determined that the person matches the specific person. Accordingly, the information processing device 100 may compare a target person with a specific person.

According to the information processing device 100, comparison of a person may be performed on the basis of characteristics related to silhouettes of multiple parts in a second frame. Accordingly, the information processing device 100 may apply a method of using the position of a silhouette to comparison processing.

According to the information processing device 100, when it is determined that movement of an object and movement of a part have a correlation, a first frame in which the correlation is seen among multiple frames constituting a video may be specified, a predetermined number of consecutive frames not including a specified first frame among multiple frames may be specified, and a specified predetermined number of frames may be set as the second frame. Accordingly, the information processing device 100 may obtain a predetermined number of frames to be used in the comparison processing and may facilitate ensuring the execution accuracy of the comparison processing.

The comparison support method described in the present embodiment may be implemented by executing a prepared program on a computer such as a personal computer and a workstation. The comparison support program described in the embodiments above is stored on a non-transitory, computer-readable recording medium, read out from the computer-readable medium, and executed by the computer. The recording medium is a hard disk, a flexible disk, a compact disc (CD)-ROM, a magneto-optical (MO) disc, and a digital versatile disc (DVD), etc. The program may be distributed through a network such as the Internet.

According to one aspect, the accuracy of comparison processing of persons may be improved.

All examples and conditional language provided herein are intended for pedagogical purposes of aiding the reader in understanding the invention and the concepts contributed by the inventor to further the art, and are not to be construed as limitations to such specifically recited examples and conditions, nor does the organization of such examples in the specification relate to a showing of the superiority and inferiority of the invention. Although one or more embodiments of the present invention have been described in detail, it should be understood that the various changes, substitutions, and alterations could be made hereto without departing from the spirit and scope of the invention.

## Claims

1. A comparison support program for causing a computer to execute a process, the process comprising:
obtaining a video that includes a person;
detecting an object included in the video by analyzing the obtained video;
determining, on a basis of a positional relation between the detected object and any one of a plurality of parts of the person, whether movement of the object and movement of the any one of the plurality of parts have a correlation;
when determining that the movement of the object and the movement of the any one of the plurality of parts have the correlation, specifying, among a plurality of frames constituting the video, a first frame which has the correlation; and
performing authentication processing of the person by using a second frame that is among the plurality of frames and excludes the first frame.

2. The comparison support program according to claim 1, the process further comprising:
detecting on the obtained video, a position of the object different from the person; and
specifying a positional relation between the detected position of the object and a position of each of the plurality of parts on the obtained video, wherein
the second frame is one or more frames among the plurality of frames, excluding the first frame which has the correlation between the movement of the object and the movement of the any one of the plurality of parts.

3. The comparison support program according to claim 1, the process further comprising:
detecting a position of each of the plurality of parts on the obtained video by inputting the obtained video to a first machine learning model that in response to input of the video, outputs the position of each of the plurality of parts of the person captured on the video, wherein
the specifying includes specifying the positional relation between the detected position of the object and the detected position of at least one of the plurality of parts, and
the second frame is one or more frames among the plurality of frames, excluding the first frame in which the correlation is seen between the movement of the object and the movement of the any one of the plurality of parts.

4. The comparison support program according to claim 3, the process further comprising:
generating skeletal frame information of the person by analyzing the video; and
specifying positions of bones or joints of the person using the generated skeletal frame information of the person, wherein
the positions of the plurality of parts of the person are positions of the bones or joints of the plurality of parts.

5. The comparison support program according to claim 3, wherein the positions of the plurality of parts of the person are positions of silhouettes of the plurality of parts.

6. The comparison support program according to claim 1, wherein
the plurality of parts includes a part that is a hand of the person,
the determining includes determining on a basis of the positional relation between the detected object and the part that is a hand, whether the movement of the object and the movement of the part that is a hand have a correlation on the obtained video, and
the specifying includes specifying among the plurality of frames, the first frame in which the correlation is seen, when the movement of the object and the movement of the part that is a hand are determined to have the correlation, and specifying among the plurality of frames, one or more of the plurality of frames excluding the specified first frame, and setting the specified one or more frames as the second frame.

7. The comparison support program according to claim 1, wherein
the determining includes determining on a basis of the positional relation between a time series of a position of the detected object and a time series of a position of the at least one of the plurality of parts, whether the movement of the object and the movement of the any one of the plurality of parts have the correlation, and
the specifying includes specifying among the plurality of frames, the first frame in which the correlation is seen, when the movement of the object and the movement of the any one of the plurality of parts is determined to have the correlation, and specifying among the plurality of frames, one or more frames excluding the specified first frame, and setting the specified one or more frames as the second frame.

8. The comparison support program according to claim 1, wherein the authentication processing includes performing a comparison of the person on a basis of characteristics related to temporal changes of positions of the plurality of parts in the second frame.

9. The comparison support program according to claim 1, the comparison support program further comprising
calculating variance of relative coordinates of a position of the at least one of the plurality of parts with respect to a reference position on the obtained video, wherein
the determining includes determining on the basis of the positional relation between a position of the detected object and a position of the any one of the plurality of parts, and the calculated variance, whether the movement of the object and the movement of the any one of the plurality of parts have the correlation, and
the specifying includes specifying among the plurality of frames, the first frame in which the correlation is seen, when the movement of the object and the movement of the any one of the plurality of parts is determined to have the correlation, and specifying among the plurality of frames, one or more frames excluding the specified first frame, and setting the specified one or more frames as the second frame.

10. The comparison support program according to claim 9, wherein the reference position is a position of a part that is a waist of the person on the obtained video.

11. The comparison support program according to claim 1, the process further comprising:
generating a characteristics vector related to a gait of the person by inputting positions of the plurality of parts on the second frame to a second machine learning model that outputs a characteristics vector related to the gait of the person in response to an input of the position of the part of the person, wherein
the authentication processing includes performing a comparison of the person on a basis of the generated characteristics vector.

12. The comparison support program according to claim 11, the process further comprising:
obtaining the characteristics vector related to a gait of a specific person and generated by inputting positions of a plurality of parts of the specific person to the second machine learning model, wherein
the authentication processing includes determining that the person matches the specific person, when the generated characteristics vector related to the gait of the person is determined to be similar to the obtained characteristics vector related to the gait of the specific person.

13. The comparison support program according to claim 1, wherein the authentication processing includes performing a comparison of the person on a basis of characteristics related to silhouettes of the plurality of parts in the second frame.

14. The comparison support program according to claim 1, wherein the specifying includes specifying among the plurality of frames constituting the video, the first frame in which the correlation is seen, when the movement of the object and the movement of the any one of the plurality of parts is determined to have the correlation, and specifying among the plurality of frames, a predetermined number of consecutive frames excluding the specified first frame, and setting the specified predetermined number of frames as the second frame.

15. A comparison support method executed by a computer, the method comprising:
obtaining a video that includes a person;
detecting an object included in the video by analyzing the obtained video;
determining, on a basis of a positional relation between the detected object and any one of a plurality of parts of the person, whether movement of the object and movement of the any one of the plurality of parts have a correlation;
when determining that the movement of the object and the movement of the any one of the plurality of parts have the correlation, specifying, among a plurality of frames constituting the video, a first frame which has the correlation; and
performing authentication processing of the person by using a second frame that is among the plurality of frames and excludes the first frame.

16. An information processing apparatus comprising:
a control unit configured to
obtain a video that includes a person;
detect an object included in the video by analyzing the obtained video;
determine, on a basis of a positional relation between the detected object and any one of a plurality of parts of the person, whether movement of the object and movement of the any one of the plurality of parts have a correlation;
when determining that the movement of the object and the movement of the any one of the plurality of parts have the correlation, specify, among a plurality of frames constituting the video, a first frame which has the correlation; and
perform authentication processing of the person by using a second frame that is among the plurality of frames and excludes the first frame.
